# EUROPÄISCHE PATENTSCHRIFT

(11) **EP 3 858 750 B1**
(45) Veröffentlichungstag und Bekanntmachung des Hinweises auf die Patenterteilung: **22.03.2023**
(21) Anmeldenummer: 20211540.8
(22) Anmeldetag: 03.12.2020
(51) Int. Cl.: B65C 9/06, B65C 9/40, B41J 3/407, B65B 57/02, B65B 61/26, G01N 21/90

(54) **VORRICHTUNG UND VERFAHREN ZUM KENNZEICHNEN VON BEHÄLTERN**
DEVICE AND PROCESS FOR MARKING OF CONTAINERS
DISPOSITIF ET PROCÉDÉ DE MARQUAGE DES CONTENEURS

(30) Priorität: 03.02.2020 DE 102020102550
(43) Veröffentlichungstag der Anmeldung: 04.08.2021
(73) Patentinhaber: Krones AG, 93073 Neutraubling (DE)
(72) Erfinder: Gertlowski, Georg, 93073 Neutraubling (DE); Lindner, Peter, 93073 Neutraubling (DE); Schober, Stefan, 93073 Neutraubling (DE); Mayer, Josef, 93073 Neutraubling (DE)
(74) Vertreter: Grünecker Patent- und Rechtsanwälte PartG mbB

(56) Entgegenhaltungen:
- EP-B1- 1 627 816
- DE-A1-102012 209 305
- DE-A1-102014 112 482
- DE-A1-102018 102 055
- DE-U1-202017 101 768

## Beschreibung

### Gebiet der Erfindung

Die vorliegende Erfindung betrifft ein Verfahren und eine Vorrichtung zum lagerichtigen Kennzeichnen, insbesondere Etikettieren und/oder Bedrucken, von Behältern, insbesondere von Flaschen oder Dosen, mit wenigstens einem Kennzeichnungselement, insbesondere einem Etikett.

### Stand der Technik

Behälter für Produkte, wie beispielsweise flüssige Lebensmittel, Hygieneartikel, andere Flüssigkeiten, Schüttgut und dergleichen, werden zur Kennzeichnung des Produkts und/oder für eine hochwertige Produktpräsentation mit einem oder mehreren Etiketten und/oder einem Aufdruck versehen. Dabei ist, insbesondere falls mehrere Etiketten und/oder Aufdrucke auf einen Behälter aufgebracht werden sollen und/oder falls die zu kennzeichnenden Behälter eine spezifische Kontur aufweisen, ein lagerichtiges Kennzeichnen, d.h. Aufbringen der Kennzeichnungselemente, d.h. der Etiketten und/oder Aufdrucke, an den vorgesehenen Stellen des Behälters wünschenswert. Beispielsweise ist eine spezifische relative Anordnung mehrerer Etiketten auf der Behälteraußenfläche, zum Beispiel bei Aufbringen eines Rumpfetiketts und eines Brustetiketts auf Flaschen, wünschenswert, um eine ansprechende Produktpräsentation zu gewährleisten. Bei nicht rotationssymmetrischen Behältern, wie sie beispielsweise häufig für Hygieneartikel verwendet werden, ist eine spezielle Anordnung der aufgebrachten Etiketten bzw. Aufdrucke bezüglich spezifischer Behälterkonturen, beispielsweise einer radial vorspringenden oder zurückgesetzt angeordneten Präsentationsfläche des Behälters, wünschenswert.

Eine gattungsgemäßes Verfahren und eine gattungsgemäße Vorrichtung sind aus DE 10 2018 102 055 A1 sowie DE 10 2012 209 305 A1, DE 10 2014 112 482 A1 und DE 20 2017 101 768 A1 bekannt.

Aus dem Stand der Technik ist ein Verfahren zum Etikettieren von Flaschen mit einer Sensoreinheit zum Bestimmen der Form und Position von Flaschen, die auf rotierenden Drehtellern an Etikettieraggregaten vorbeibewegt werden, bekannt. Das europäische Patent EP 1627816 B1 beschreibt ein Verfahren zum Etikettieren von Flaschen oder dergleichen Konturbehältern mit wenigstens einem Etikett, bei dem die Behälter auf Behälterträgern einer Transportstrecke angeordnet an wenigstens einem Etikettieraggregat vorbeibewegt werden, und dabei jeweils wenigstens ein Etikett mit einer Etikettenseite an die Außenfläche des jeweiligen Behälters übergeben und anschließend an der Behälteraußenfläche befestigt wird. Mittels wenigstens einer ersten Sensoreinheit an der Transportstrecke werden die Kontur des jeweiligen Behälters und/oder die für die Etikettierung kritischen Abmessungen dieser Kontur und/oder die Lage bereits auf den Behälter aufgebrachter Etiketten zur Bildung eines Istwertes erfasst. Unter Berücksichtigung der Abweichung des Istwertes von einem Sollwert wird der Etikettiervorgang des jeweiligen Etiketts an dem zu etikettierenden Behälter derart gesteuert, dass das jeweilige Etikett nach dem Aufbringen auf den Behälter dort die gewünschte Lage aufweist.

Durch die Erfassung eines behälterspezifischen Istwertes und den Vergleich dieses Istwertes mit einem für den Behältertyp vorgegebenen Sollwert sollen fertigungsbedingte Maßtoleranzen der Behälter, die von Behälter zu Behälter variieren, berücksichtigt werden.

Das beschriebene Verfahren ist jedoch sehr aufwändig, da für jeden einzelnen Behälter ein individueller Korrekturvorgang durchgeführt wird. Darüber hinaus ist das Verfahren auf das Erfassen und Korrigieren von Fertigungstoleranzen der Behälter ausgerichtet. Zusätzlich treten an herkömmlichen Etikettiermaschinen jedoch auch systematische Fehler auf, die beispielsweise durch Fehlstellungen einzelner oder aller Drehteller, durch Schlupf der von einem Zuförderer übernommenen und entlang der Transportstrecke transportierten Behälter, durch konstruktionsbedingte und/oder verschleißbedingte Variationen der die Drehteller antreibenden Servomotoren, und dergleichen verursacht werden. Derartige systematische Fehler werden nach dem oben beschriebenen Verfahren wiederholt korrigiert, wobei das Auftreten eines systematischen Fehlers an nur einem Drehteller möglicherweise zu einer unnötigen Korrektur an den übrigen Drehtellern, im schlimmsten Fall zu einem instabilen Verhalten des Korrekturverfahrens, führen kann.

Es liegt somit der vorliegenden Erfindung die Aufgabe zugrunde, ein effizientes und wirkungsvolles Verfahren zur Korrektur von Lagefehlern von auf eine Vielzahl von Behältern aufgebrachten Kennzeichnungselementen sowie eine entsprechende Vorrichtung zur Verfügung zu stellen. Ganz allgemein soll der Ausschuss an mangelhaft gekennzeichneten Behältern, die nicht in den Handel gehen dürfen, reduziert werden. Darüber hinaus sollen das Verfahren und die Vorrichtung insbesondere massenproduktionstauglich sein.

### Beschreibung der Erfindung

Die oben genannten Aufgaben werden gelöst durch ein Verfahren zum Kennzeichnen, insbesondere zum Etikettieren und/oder Bedrucken, von Behältern mit wenigstens einem Kennzeichnungselement, insbesondere einem Etikett und/oder Aufdruck, umfassend: Transportieren der Behälter entlang einer Transportstrecke mittels einer Transportvorrichtung, insbesondere einer Rundläufermaschine, mit einer Vielzahl von um Drehachsen drehbar angeordneten Behälteraufnahmen für je einen Behälter; Aufbringen jeweils eines ersten Kennzeichnungselements auf eine Außenfläche der Behälter mittels eines ersten Kennzeichnungsaggregats, das an der Transportstrecke angeordnet ist; und Erfassen der Lage des auf den jeweiligen Behälter aufgebrachten ersten Kennzeichnungselements als Istwert mittels einer ersten Sensoreinheit, die stromabwärts des ersten Kennzeichnungsaggregats angeordnet ist; wobei die erfassten Istwerte der Lage des ersten Kennzeichnungselements für eine Vielzahl von Behältern mittels eines Steuer- und/oder Regelsystems statistisch ausgewertet werden und eine Korrektur des Aufbringen des ersten Kennzeichnungselements bezüglich der Lage des ersten Kennzeichnungselements auf der Grundlage der statistischen Auswertung vorgenommen wird.

Beim vorliegenden Verfahren wird auf eine Außenfläche der Behälter jeweils wenigstens ein erstes Kennzeichnungselement mittels eines ersten Kennzeichnungsaggregats aufgebracht. Bei den ersten und den im Folgenden erwähnten weiteren Kennzeichnungselementen kann es sich um Etiketten, insbesondere vorgedruckte Etiketten, oder direkt auf die Außenfläche des Behälters aufgedruckte, insbesondere flächig aufgedruckte, Kennzeichnungen handeln. Auch eine Kombination, bei der ein auf den Behälter aufgebrachtes Etikett im Nachgang zusätzlich bedruckt wird, ist denkbar, wobei das erste Kennzeichnungselement durch das Etikett und das zweite Kennzeichnungselement durch den Aufdruck auf das Etikett gebildet wird. Bei den Etiketten kann es sich um die üblichen Etiketten handeln. Beispielsweise können Rumpfetiketten und Brustetiketten auf Flaschen oder entsprechende Behälter aufgebracht werden. Des Weiteren können Rückenetiketten auf die Behälter aufgebracht werden. Weitere Beispiele sind Halsetiketten, Rundumetiketten, Etikettenschlaufen und dergleichen.

Bei den Behältern kann es sich insbesondere um Flaschen oder flaschenähnliche Behälter, aber auch um Dosen, Kartons, Gebinde oder allgemein Konturbehälter handeln. Die Kennzeichnungselemente werden mittels eines entsprechend ausgebildeten Kennzeichnungsaggregats auf eine Außenfläche der Behälter aufgebracht. Im Falle von Etiketten kann dies mit einem der im Stand der Technik bekannten Etikettieraggregate geschehen. Dabei umfasst das Aufbringen des jeweiligen Etiketts das Übergeben des Etiketts mit einer der Bildseite gegenüberliegenden, haftenden Seite an die Außenfläche der Behälter, wobei das übergebene Etikett im Nachgang durch Anbürsten auf der Außenfläche befestigt wird. Es können selbstklebende Etiketten oder solche, auf deren haftende Seite ein Kleber bzw. Leim aufgebracht wird, verwendet werden.

Beispielsweise ist aus der europäischen Patentanmeldung EP 2 157 020 A1 der Anmelderin ein Spende-Aggregat bzw. eine Spendevorrichtung für Selbstklebeetiketten wie folgt bekannt: Die Etiketten werden auf einem mehrere Etiketten tragenden Trägerband aufgebracht. Bei derartigen Gestaltungen wird das Trägerband - z.B. kontinuierlich - zu einer Stelle bewegt, an der ein Etikett bzw. Etiketten in Richtung einer Flasche bzw. in Richtung der Flaschen abgegeben werden sollen. Dort wird das Trägerband mittels einer sogenannten Spendekante stark umgelenkt, so dass sich das jeweils auf dem Trägerband klebende Etikett an der Spendekante vom Trägerband ablöst und einzeln auf die Flasche aufgebracht werden kann. Bei den der Anmelderin bekannten Etikettiermaschinen, bei denen die Etiketten unter Verwendung eines mehrere Etiketten tragenden Trägerbandes in Richtung der Flaschen bewegt werden, ist die sogenannte Spendekante typischerweise vertikal ausgerichtet, so dass sie im Wesentlichen in Richtung der Achse von vorbeilaufenden, aufrechtstehenden Flaschen verläuft. Dies ermöglicht es, dass sich die Etiketten derart orientiert von dem Trägerband lösen, dass sie auf einfache Weise auf einen jeweils im Wesentlichen zylindrischen Flaschenbauch so aufgebracht werden können, dass sie mit ihrer Längserstreckungsrichtung in Umfangsrichtung des Flaschenbauches verlaufen. Dies hat sich bislang gut bewährt.

Im Falle von Aufdrucken als Kennzeichnungselementen kann das Aufbringen mit einem der im Stand der Technik bekannten Druckaggregate, insbesondere Direktdruckaggregate, erfolgen. Beispielsweise kann ein direktes Bedrucken der Außenfläche des Behälters mittels eines oder mehrerer Druckköpfe, die an der Transportstrecke angeordnet sind, nach dem Tintenstrahlprinzip wie in der DE 10 2013 217 669 A1 beschrieben, erfolgen. Dabei kann jeder Druckkopf in einem eigenen Kennzeichnungsaggregat angeordnet sein oder mehrere bzw. alle Druckköpfe können in einem einzelnen Kennzeichnungsaggregat angeordnet sein. Das Bedrucken kann je nach Ausbildung des oder der Druckköpfe in schwarz-weiß, Graustufen oder Farbe mit einem gewünschten Druckbild erfolgen.

Das Aufbringen der Kennzeichnungselemente kann somit durch Etikettieren, d.h. Übergeben eines Etiketts, oder durch Aufdrucken eines Druckbildes auf die Behälteraußenfläche oder ein bereits aufgebrachtes Etikett erfolgen.

Beim vorliegenden Verfahren werden die Behälter mittels einer Transportverrichtung mit einer Vielzahl von um Drehachsen drehbar angeordneten Behälteraufnahmen entlang einer Transportstrecke transportiert. Bei der Transportvorrichtung kann es sich insbesondere um eine an sich bekannte Rundläufermaschine bzw. ein Karussell mit einer Vielzahl von Behälteraufnahmen, beispielsweise in Form von Drehtellern, handeln. Je nach zu transportierendem Behälter kann alternativ oder zusätzlich eine Zentriervorrichtung, beispielsweise in Form einer Zentrierglocke, zur Aufnahme eines oberen Teils des Behälters, insbesondere einer Behältermündung bei Flaschen oder flaschenartigen Behältern, vorgesehen sein.

Wie an sich bekannt läuft die Vielzahl von Behälteraufnahmen entlang einer Kreisbahn um, die beispielsweise durch einen Umfang der Rundläufermaschine gebildet wird. Dabei ist die Transportstrecke entlang dieser Kreisbahn angeordnet, beispielsweise zwischen einem Zuförderer für die Behälter, von dem die Behälter an die Behälteraufnahmen übergeben werden, und einem Abförderer für die Behälter, von dem die Behälter von den Behälteraufnahmen übernommen werden. Rundläufermaschinen zum Etikettieren und/oder Bedrucken von Behältern sind im Stand der Technik wohl bekannt und werden daher hier nicht im Detail beschrieben. Neben dem bereits erwähnten Zuförderer, beispielsweise in Form eines Sternrades, und dem Abförderer, ebenfalls beispielsweise in Form eines Sternrades, können eine Einteilschnecke sowie ein Behältertisch vorgesehen sein. Die hier und im Folgenden erwähnten Kennzeichnungsaggregate können im Falle von Etikettieraggregaten wie an sich bekannt mit einer oder zwei Etikettenbandrollen, einer Etikettenzuführung, einer Schneideinrichtung, einer Vakuumwalze, einem Vakuum- bzw. Greiferzylinder oder dergleichen ausgebildet sein. Alternativ können Etikettieraggregate mit einem Etikettenkasten, einem Palettenkarussell bzw. einem Entnahmeelementträger, entsprechenden Paletten bzw. Entnahmeelementen, inklusive eventuell benötigter Steuerkurve, und einem Greiferzylinder, oder dergleichen als Kennzeichnungsaggregate verwendet werden. Beispielhafte Ausführungsformen solcher Kennzeichnungsaggregate und Transportvorrichtungen werden im Zusammenhang mit den Figuren genauer beschrieben.

Beim vorliegenden Verfahren sind die Behälteraufnahmen um individuelle Drehachsen drehbar ausgebildet, wobei die jeweilige Drehachse mit einer Symmetrie- bzw. Längsachse des transportierten Behälters, beispielsweise der transportierten Flasche, zusammenfallen kann oder versetzt zu dieser angeordnet sein kann. Wie unten genauer beschrieben können eine oder mehrere Vorrichtungen, beispielsweise Servomotoren, vorgesehen sein, mittels derer sich die Behälteraufnahmen, insbesondere unabhängig voneinander, um ihre jeweilige Drehachse drehen lassen. Zusätzlich oder alternativ können die Behälteraufnahmen unabhängig voneinander oder gemeinsam höhenverstellbar ausgebildet sein. Ebenfalls zusätzlich oder alternativ können die Kennzeichnungsaggregate wie unten genauer beschrieben höhenverstellbar ausgebildet sein. Des Weiteren können wie unten genauer beschrieben die Kennzeichnungsaggregate derart ausgebildet sein, dass ein Zeitpunkt oder eine Rotationsstellung des Aufbringens des jeweiligen Kennzeichnungselements auf die Behälter kontrolliert verändert werden kann. Desgleichen sind Kombinationen der oben beschriebenen Einflussmöglichkeiten auf die Lage des aufgebrachten Kennzeichnungselements denkbar.

Beim vorliegenden Verfahren ist das erste Kennzeichnungsaggregat an der Transportstrecke angeordnet, wobei die Anordnung derart gewählt wird, dass jeweils ein erstes Kennzeichnungselement von dem ersten Kennzeichnungsaggregat auf die mittels der Behälteraufnahmen an dem Kennzeichnungsaggregat vorbeigeführten Behälter aufgebracht werden kann. Denkbar ist jedoch auch, mittels des ersten Kennzeichnungsaggregats mehr als ein erstes Kennzeichnungselement auf die Behälter aufzubringen. Beispielsweise kann das erste Kennzeichnungsaggregat ein erstes und ein zweites Kennzeichnungselement, beispielsweise ein Rumpf- und ein Brustetikett, auf die Behälter aufbringen. Entsprechend kann die Lage des auf den jeweiligen Behälter aufgebrachten ersten und zweiten Kennzeichnungselements erfasst werden.

Unter der Lage eines auf einen Behälter aufgebrachten Kennzeichnungselements ist hier und im Folgenden die relative Lage des aufgebrachten Kennzeichnungselements bezüglich einer Kontur der Außenfläche des Behälters zu verstehen. Beispielsweise kann die Lage eine relative Anordnung des Kennzeichnungselements, insbesondere eines Merkmals, beispielsweise einer Kante oder eines Randes, des Kennzeichnungselements, bezüglich eines Merkmals, beispielsweise des Bodens, einer Mündung, eine Vertiefung, oder dergleichen, des Behälters umfassen. Dabei kann eine relative Lage bezüglich einer axialen Ausdehnung des Behälters, im Folgenden als relative Höhe bezeichnet, erfasst werden. Beispielsweise kann die relative Höhe einer Unterkante eines Etiketts bzw. eines Aufdrucks über dem Boden des Behälters erfasst werden. Alternativ oder ergänzend kann eine relative Lage in Umfangsrichtung des Behälters bezüglich eines Merkmals des Behälters, beispielsweise einer Kante des Behälters, einer Vertiefung oder einer Erhöhung der Außenfläche des Behälters, einer Markierung auf der Behälteraußenfläche oder dergleichen, erfasst werden. Die Lage kann auch die relative Anordnung bezüglich eines oder mehrerer bereits auf den Behälter aufgebrachter Kennzeichnungselemente umfassen. Schließlich kann auch die zweidimensionale Ausrichtung des aufgebrachten Kennzeichnungselements bezüglich der Behälteraußenfläche, beispielsweise als Verkippung eines Etiketts um einen Winkel zur Bodenfläche, als Teil der Lage erfasst werden.

Die zum Erfassen der Lage des Kennzeichnungselements verwendete Sensoreinheit kann entsprechend derart ausgebildet sein, dass einzelne oder mehrere der oben beschriebenen relativen Anordnungen erfasst werden können. Wie unten genauer beschrieben kann beispielsweise eine Kamera mit zugehöriger Bildverarbeitungseinheit eingesetzt werden, um die Lage des aufgebrachten Kennzeichnungselements zu erfassen.

Beim vorliegenden Verfahren wird die Lage des auf den jeweiligen Behälter aufgebrachten ersten Kennzeichnungselements mittels einer ersten Sensoreinheit stromabwärts des ersten Kennzeichnungsaggregats erfasst. Somit wird der tatsächliche Istwert der relativen Anordnung des auf den Behälter aufgebrachten ersten Kennzeichnungselements erfasst. Dieser kann dann mit einem, insbesondere konfigurierbaren Sollwert der Lage verglichen werden, um eine Abweichung des Istwertes zu bestimmen.

Beim vorliegenden Verfahren werden die erfassten Istwerte der Lage des ersten Kennzeichnungselements für eine Vielzahl von Behältern mittels einer Steuer- und/oder Regelsystems statistisch ausgewertet, wobei eine Korrektur des Aufbringens des ersten Kennzeichnungselements bezüglich der Lage des ersten Kennzeichnungselements auf der Grundlage der statistischen Auswertung vorgenommen wird. Hierzu kann das Steuer- und/oder Regelsystem wie unten genauer beschrieben entsprechende Vorrichtungen, insbesondere Servomotoren, aufweisen, die auf der Grundlage der statistischen Auswertung gesteuert die relative Anordnung des auf die jeweiligen Behälter aufgebrachten ersten Kennzeichnungselements in Richtung eines vorgegebenen, insbesondere konfigurierbaren Sollwertes korrigieren.

Anders als in dem oben beschriebenen Stand der Technik erfolgt die Auswertung nicht für einzelne Behälter, sondern statistisch für eine Vielzahl von Behältern. Demnach wird die statistische Auswertung auf der Grundlage von wenigstens 30 erfassten Istwerten, bevorzugt wenigstens 300 erfassten Istwerten vorgenommen. Dadurch können systematische Abweichungen, beispielsweise durch eine schlecht eingestellte Transportvorrichtung und/oder ein schlecht eingestelltes Kennzeichnungsaggregat, aber auch aufgrund systematischer Abweichungen ganzer Chargen von Behältern von einer gewünschten Normkontur, erfasst und korrigiert werden.

Die Erfassung und Korrektur kann während des Produktionsbetriebs oder alternativ während einer Prüfphase bzw. Einlaufphase erfolgen. Erfindungsgemäß erfolgt die Korrektur erst, nachdem die Istwerte der Lage des ersten Kennzeichnungselements für eine vorgegebene Anzahl von Behältern erfasst und statistisch ausgewertet wurden. Auf diese Weise kann das oben erwähnte übermäßige Korrigieren der Lage und insbesondere eine Instabilität des Korrekturmechanismus vermieden werden. Eine statistische Auswertung gestattet zudem, insbesondere, wenn sie wiederholt durchgeführt wird, einen Trend in der Abweichung von einem Sollwert zu detektieren, beispielsweise aufgrund sich beim Betrieb akkumulierender Fehlstellungen der Behälteraufnahmen und/oder eines zunehmenden Verschleißes von für eine lagerichtige Positionierung der Behälter am ersten Kennzeichnungsaggregat benötigten Maschinenteilen.

Die statistische Auswertung kann insbesondere das Bestimmen eines Mittelwertes und/oder einer Streuung der erfassten Istwerte umfassen. Anhand des Mittelwertes, beispielsweise einer mittleren relativen Höhe eine Etikettenunterkante über dem Behälterboden, kann eine mittlere Abweichung von einem Sollwert bestimmt werden. Dabei kann die zuvor erwähnte Korrektur auf der Grundlage des bestimmten Mittelwertes, genauer der Abweichung des Mittelwertes von einem Sollwert, vorgenommen werden, beispielsweise indem die Behälteraufnahmen vor Erreichen des ersten Kennzeichnungsaggregats um einen entsprechenden Winkel gedreht werden. Damit kann erreicht werden, dass die Lage der auf die Behälter aufgebrachten Kennzeichnungselemente um den Sollwert streut.

Alternativ oder ergänzend kann wie erwähnt eine Streuung der erfassten Istwerte bestimmt werden, wobei auf der Grundlage der Streuung, beispielsweise durch Vergleich mit einer vorgegebenen Maximalstreuung, bestimmt werden kann, dass eine allgemeine Korrektur beispielsweise durch, insbesondere händische, Kalibrierung der involvierten Maschinenteile durchgeführt werden soll. Des Weiteren kann das Überschreiten einer Maximalstreuung auch das nachfolgend beschriebene Detektieren periodisch auftretender Abweichungen auslösen.

Gemäß einer Weiterbildung kann die Anzahl der erfassten Istwerte für die statistische Auswertung wenigstens ein Vielfaches einer Anzahl der Behälteraufnahmen der Transportvorrichtung betragen. Dies gestattet ein Detektieren periodisch auftretender Abweichungen der erfassten Istwerte von einem Sollwert als Teil der statistischen Auswertung. Dabei kann das Detektieren periodisch auftretender Abweichungen insbesondere mittels Fourier-Analyse der erfassten Istwerte bzw. deren Abweichungen von einem Sollwert erfolgen. Hierzu kann das Steuer- und/oder Regelsystem eine entsprechende Recheneinheit, insbesondere mit angebundener Speichereinheit, zum Ausführen entsprechender Softwaremodule aufweisen. Steuer- und/oder Regeleinheiten mit derartigen Recheneinheiten, beispielsweise speicherprogrammierbare Steuerungen, sind im Stand der Technik wohl bekannt, sodass hier auf eine eingehende Beschreibung verzichtet wird.

Da die Anzahl der Behälteraufnahmen der Transportvorrichtung konstant ist und deren Abfolge entlang der Transportstrecke, insbesondere am ersten Kennzeichnungsaggregat, im Betrieb stets dieselbe ist, kann durch die oben beschriebene statistische Auswertung zum Detektieren periodisch auftretender Abweichungen eine Fehlstellung einzelner Behälteraufnahmen detektiert werden. Beispielsweise kann eine Behälteraufnahme aufgrund einer fehlerhaften Konfiguration des zugehörigen Servomotors stets zu einer abweichenden Drehstellung des mitgeführten Behälters beim Aufbringen des ersten Kennzeichnungselements führen, während andere Behälteraufnahmen diese Abweichungen nicht aufweisen. Die wiederkehrende Abweichung in der Sequenz erfasster Istwerte der Lage kann mittels Fourier-Analyse leicht detektiert werden, sodass eine gezielte Korrektur der Lage bezüglich dieser speziellen Behälteraufnahme vorgenommen werden kann.

Da auch das Kennzeichnungsaggregat unter Umständen rotierende Einheiten, beispielsweise einen Greiferzylinder, mit einer Vielzahl von gleichartigen Elementen, beispielsweise Greiferelementen, aufweisen kann, deren Anzahl im Allgemeinen von der Anzahl der Behälteraufnahmen abweicht, lässt sich durch die statistische Auswertung auch auf einfache Weise, beispielsweise über die detektierte Frequenz der periodischen Abweichung, bestimmen, an welcher rotierenden Einheit die systematische Abweichung auftritt und somit zu korrigieren ist.

Erfindungsgemäß umfasst das Verfahren weiterhin ein Zuordnen erfassten Istwerte zu den jeweiligen Behälteraufnahmen der Transportvorrichtung und optional ferner zu jeweiligen Greifelementen eines Greiferzylinders des ersten Kennzeichnungsaggregats, falls dieses einen solchen Greiferzylinder aufweist. Entsprechende Abwandlungen sind für alternative Weiterbildungen des ersten Kennzeichnungsaggregats denkbar. Beispielsweise kann bei einem Etikettieraggregat mit einer Vielzahl von umlaufend angeordneten Paletten zur direkten Übergabe der mitgeführten Etiketten an die Behälter ein Zuordnen der erfassten Istwerte zu den jeweiligen Paletten erfolgen. Das Zuordnen der erfassten Istwerte kann beispielsweise wie weiter unten beschrieben mittels einer oder mehrerer Positionserfassungseinheiten zum Erfassen einer absoluten Position des jeweiligen Elements, d.h. der jeweiligen Behälteraufnahme, des jeweiligen Greiferelements, der jeweiligen Palette oder dergleichen, erfolgen. Die erfassten Istwerte können dann zusammen mit ihrer jeweiligen Zuordnung in einer Speichereinheit des Steuer- und/oder Regelsystems zur weiteren Verarbeitung gespeichert werden.

Die Zuordnung der erfassten Istwerte erlaubt es, die Korrektur bezüglich der Lage des ersten Kennzeichnungselements mittels des Steuer- und/oder Regelsystems spezifisch für die jeweilige Behälteraufnahme der Transportvorrichtung und/oder das jeweilige Greiferelement des Greiferzylinders vorzunehmen. Damit können die oben erwähnten periodischen Abweichungen gezielt korrigiert werden.

Erfindungsgemäß umfasst das Verfahren ferner ein Erfassen einer absoluten Position wenigstens einer Behälteraufnahme entlang der Transportstrecke mittels wenigstens einer Positionserfassungseinheit, wobei das Steuer- und/oder Regelsystem erfasste Istwerte basierend auf einem Signal der wenigstens einen Positionserfassungseinheit den jeweiligen Behälteraufnahmen zuordnet.

Gemäß einer weiteren Weiterbildung kann das Verfahren weiterhin ein Bestimmen wenigstens einer Behälteraufnahme der Transportvorrichtung und/oder eines Greiferelements des Greiferzylinders des ersten Kennzeichnungsaggregats umfassen, für die bzw. das eine Abweichung des zugehörigen erfassten Istwertes von einem Sollwert der Lage des ersten Kennzeichnungselements einen konfigurierbaren Grenzwert überschreitet. Der konfigurierbare Grenzwert kann insbesondere in der Art einer Sortenverwaltung in einer Speichereinheit des Steuer- und/oder Regelsystems für den jeweiligen Behältertyp und/oder den jeweiligen Typ des Kennzeichnungselements, beispielsweise den jeweiligen Etikettentyp, gespeichert sein. Es sei betont, dass der erwähnte Test auf eine Überschreitung des Grenzwertes erst auf der Grundlage der statistischen Auswertung ausgelöst wird und somit nicht ganz allgemein für jeden Behälter sowie jedes aufgebrachte erste Kennzeichnungselement separat durchgeführt wird. Beispielsweise kann nach erfolgtem Detektieren periodisch auftretender Abweichungen der erfassten Istwerte von einem Sollwert bestimmt werden, welcher der erfassten Istwerte einer Periode um mehr als den konfigurierbaren Grenzwert von dem Sollwert der Lage abweicht. Daraus kann, insbesondere in Kombination mit dem oben beschriebenen Zuordnen erfasster Istwerte, eine Identifizierung einer spezifischen Behälteraufnahme und/oder eines spezifischen Greiferelements und/oder einer spezifischen Palette, die für die Abweichung verantwortlich ist, erfolgen.

Die zugehörige Behälteraufnahme und/oder das zugehörige Greiferelement kann dann über ein akustisches und/oder optisches Signal gekennzeichnet werden und/oder in einer Anzeigeeinrichtung des Steuer- und/oder Regelsystems angezeigt werden. Beispielsweise kann in dem Moment, zu dem sich die zugehörige Behälteraufnahme an dem ersten Kennzeichnungsaggregat befindet, ein akustisches Warnsignal ertönen, das einen Bediener auf die fehlerhaft eingestellte Behälteraufnahme aufmerksam macht. Alternativ oder ergänzend kann die zugehörige Behälteraufnahme durch ein optisches Signal, beispielsweise durch Anstrahlen mit einer Lichtquelle, zum Beispiel einem Scheinwerfer oder einem Lasermarker, sichtbar gekennzeichnet werden. Ebenso kann die zugehörige Behälteraufnahme, beispielsweise über eine Identifikationsnummer, in einer Anzeigeeinrichtung, beispielsweise einem Touch-Display, des Steuer- und/oder Regelsystems angezeigt werden. Eine entsprechende Vorgehensweise ist für die Greiferelemente eines Greiferzylinders bzw. die Paletten eines Palettenkarussells des ersten Kennzeichnungsaggregats denkbar.

Ausgehend von der Kennzeichnung der zugehörigen Behälteraufnahme und/oder des zugehörigen Greiferelements kann ein Bediener, während einer Produktionsunterbrechung, eine Korrektur des Aufbringens des ersten Kennzeichnungselements, beispielsweise durch Nachjustierung der involvierten Maschinenteile, vornehmen. Es versteht sich jedoch, dass das erfindungsgemäße Verfahren auch eine automatische Korrektur durch das Ansteuern entsprechender Steuervorrichtungen, beispielsweise von Servomotoren und/oder von linearen Stellmotoren, mittels einer Steuer- und/oder Regeleinheit des Steuer- und/oder Regelsystems umfassen kann.

Gemäß einer Weiterbildung kann das Verfahren weiterhin das Aufbringen jeweils eines zweiten Kennzeichnungselements auf die Außenfläche der Behälter mittels eines zweiten Kennzeichnungsaggregats, das an der Transportstrecke stromabwärts von dem ersten Kennzeichnungsaggregat angeordnet ist, und das Erfassen der Lage des auf den jeweiligen Behälter aufgebrachten zweiten Kennzeichnungselements als Istwert mittels einer zweiten Sensoreinheit, die stromabwärts des zweiten Kennzeichnungsaggregats angeordnet ist, umfassen, wobei die erfassten Istwerte der Lage des zweiten Kennzeichnungselements für die Vielzahl von Behältern, insbesondere in Relation zu den erfassten Istwerten der Lage des ersten Kennzeichnungselements, mittels des Steuer- und/oder Regelsystems statistisch ausgewertet werden, und wobei eine Korrektur des Aufbringens des zweiten Kennzeichnungselements bezüglich der Lage des zweiten Kennzeichnungselements auf der Grundlage der statistischen Auswertung vorgenommen wird.

Die oben beschriebenen Weiterbildungen bezüglich des ersten Kennzeichnungselements, des ersten Kennzeichnungsaggregats sowie der Lage des auf den jeweiligen Behälter aufgebrachten ersten Kennzeichnungselements können äquivalent auch auf das zweite Kennzeichnungselement, das zweite Kennzeichnungsaggregat und die Lage des auf den jeweiligen Behälter aufgebrachten zweiten Kennzeichnungselements angewendet werden. Insbesondere kann das zweite Kennzeichnungsaggregat als Etikettieraggregat ausgebildet sein, welches derart an der Transportstrecke angeordnet ist, dass ein weiteres Etikett auf die an dem Etikettieraggregat vorbeigeführten Behälter aufgebracht werden kann. Beispielsweise kann mittels des ersten Kennzeichnungsaggregats zunächst ein Rumpfetikett auf Flaschen als Behälter aufgebracht werden, wobei mittels des zweiten Kennzeichnungsaggregats im Nachgang, d.h. stromabwärts vom ersten Kennzeichnungsaggregat, zusätzlich ein Brust- oder Halsetikett auf die Flaschen aufgebracht wird. Ein weiteres Beispiel für das aufeinanderfolgende Aufbringen mehrerer Etiketten mittels des ersten und zweiten Kennzeichnungsaggregats ist durch das Aufbringen eines Rumpfetiketts auf einer Flasche und das anschließende Aufbringen eines Rückenetiketts auf einer dem Rumpfetikett gegenüberliegenden Rückseite der Flasche gegeben. Des Weiteren kann mittels des ersten Kennzeichnungsaggregats zunächst ein Etikett auf den jeweiligen Behälter aufgebracht werden, das im Nachgang mittels des zweiten Kennzeichnungsaggregats bedruckt wird. Eine Vielzahl weiterer Kombinationen und Weiterbildungen, auch unter Anordnung weiterer Kennzeichnungsaggregate an der Transportstrecke, beispielsweise zum sequenziellen Aufdrucken der Farbkomponenten eines mehrfarbigen Aufdrucks auf die Behälter, ist denkbar. Es versteht sich somit, dass die vorliegende Erfindung nicht auf die spezielle Ausführung des ersten und des zweiten Kennzeichnungsaggregats beschränkt ist.

Des Weiteren kann die zweite Sensoreinheit entsprechend der Weiterbildung der ersten Sensoreinheit, beispielsweise als Kamera mit verbundener Bildverarbeitungseinheit, ausgebildet sein. Die vorliegende Erfindung ist jedoch nicht auf eine gleichartige Ausbildung der ersten und zweiten Sensoreinheit unbeschränkt, sondern umfasst auch unterschiedliche Ausbildungen. Die erste Sensoreinheit muss dabei nicht nach dem ersten Kennzeichnungsaggregat positioniert sein, sondern kann sich auch nach einem zweiten oder dritten Kennzeichnungsaggregat befinden. Die erste und zweite Sensoreinheit ist des Weiteren nicht zwingend als physikalisch getrennt zu verstehen, sondern kann beispielsweise einen einzelnen Flächensensor umfassen, der zwei, auch aufeinanderfolgende, Behälter gleichzeitig aufnimmt. Die Behälter können während der Vorwärtsbewegung des Etikettenkarussels von einer ersten Aufnahme mittels einer Kamera zu einer zweiten Aufnahme mittels der Kamera gezielt gedreht werden, so dass beispielsweise ein Frontund ein Rückenetikett abgebildet werden kann. Die so gewonnenen Bilder können in einer angeschlossenen Bildverarbeitungseinheit zwischengespeichert werden und die einzelnen Bildinhalte miteinander korreliert werden. Des Weiteren kann eine gemeinsame Bildverarbeitungseinheit, auch als Teil des Steuer- und/oder Regelsystems, für die erste und zweite Sensoreinheit vorgesehen sein.

Die erfassten Istwerte der Lage des zweiten Kennzeichnungselements für die Vielzahl von Behältern, für die bereits die Istwerte der Lage des ersten Kennzeichnungselements erfasst wurden, werden gemäß dieser Weiterbildung statistisch ausgewertet, wobei die Auswertung insbesondere in Relation zu den erfassten Istwerten der Lage des ersten Kennzeichnungselements erfolgen kann. Dies kann einerseits durch Bildung einer Differenz zwischen den erfassten Istwerten der Lage des ersten und zweiten Kennzeichnungselements zum Bestimmen einer relativen Lage erfolgen. Andererseits kann zunächst eine statistische Auswertung der erfassten Istwerte der Lage des zweiten Kennzeichnungselements für sich genommen erfolgen, wobei Ergebnisse dieser statistischen Auswertung in Relation zu den Ergebnissen der statistischen Auswertung der erfassten Istwerte der Lage des ersten Kennzeichnungselements weiterverarbeitet werden können. Exemplarisch sei hier lediglich eine statistische Mittelwertbildung für die erfassten Istwerte der Lage des ersten Kennzeichnungselements sowie für die erfassten Istwerte der Lage des zweiten Kennzeichnungselements angeführt, wobei eine anschließende Differenzbildung zwischen den beiden bestimmten Mittelwerten, korrigiert um den jeweiligen Sollwert, verwendet werden kann, um eine entlang der Transportstrecke fortschreitende Fehlstellung der Behälter, beispielsweise durch fortschreitenden Schlupf der transportierten Behälter, zu detektieren. Eine statistische Auswertung in Relation zu den erfassten Istwerten der Lage des ersten Kennzeichnungselements kann insbesondere bei rotationssymmetrischen Behältern, wie bestimmten Flaschen, angebracht sein, da hier die Lage des ersten Kennzeichnungselements bezüglich einer Umfangsrichtung der Flasche keinen Einfluss auf eine ansprechende Produktpräsentation hat. Es ist jedoch denkbar, dass die Ursache für eine Abweichung der relativen Lage des zweiten Kennzeichnungselements bezüglich des ersten Kennzeichnungselements nicht in dem zweiten Kennzeichnungsaggregat, sondern dem ersten Kennzeichnungsaggregat liegt, beispielsweise dadurch, dass Greiferelemente eines Greiferzylinders des ersten Kennzeichnungsaggregats zu einem unregelmäßigen Übergabezeitpunkt der Etiketten führen. In diesem Fall ist eine separate statistische Auswertung der erfassten Istwerte für das erste und das zweite Kennzeichnungselement von Vorteil.

Gemäß einer Weiterbildung kann die statistische Auswertung das Bestimmen einer, insbesondere mittleren, Abweichung der erfassten Istwerte von einem Sollwert der Lage in einer Umfangsrichtung der Behälter umfassen, wobei die Korrektur ein Drehen der Behälter um eine Behälterlängsachse vor dem Aufbringen des ersten bzw. des zweiten Kennzeichnungselements und/oder ein Anpassen eines Zeitpunktes des Aufbringens des ersten bzw. des zweiten Kennzeichnungselements umfasst. Bei Spende-Aggregaten mit Selbstklebeetiketten, die über eine Spendekante abgeschält werden, kann die seitliche Korrektur beispielsweise über eine Veränderung des Startzeitpunkts erfolgen. Wie oben beschrieben können Istwerte und Sollwerte relativ zu einer Behälterkontur oder einer Markierung erfasst und angegeben werden. Die Markierung kann insofern auch unabhängig von dem jeweiligen Behälter sein, als sie sich auf einen Referenzpunkt der Sensoreinheit oder der Transportvorrichtung bzw. der Gesamtmaschine bezieht. Beispielsweise kann bei Verwendung einer Kamera als Sensoreinheit ein Bildrand der Kamera als Referenz verwendet werden. Ebenso können Maschinenteile, deren Position wohldefiniert ist, beispielsweise Teile eines Aufstellrahmens der Maschine oder gesondert vorgesehene Markierungen, als Referenz verwendet werden. Bevorzugt wird als Referenzpunkt ein Gestaltungsmerkmal des Behälters, ein Embossing, die Behälterkontur oder Teile davon verwendet.

Die Umfangsrichtung der Behälter ist im Allgemeinen durch die Form der Behälter selbst definiert, beispielsweise bei runden Behältern wie Flaschen oder Dosen. Bei anderen Behälterformen kann die Umfangsrichtung bezüglich der Drehachse der Behälteraufnahmen, also als azimutale Richtung, definiert werden. Ebenso kann die Behälterlängsachse bei derartigen Behältern, wo sie sich nicht unmittelbar aus der Form der Behälter gibt, parallel zur Drehachse definiert werden. Die Istwerte und Sollwerte können je nach Bedarf als Strecken oder Winkel angegeben werden.

Durch Bestimmen einer mittleren Abweichung der erfassten Istwerte von einem Sollwert der Lage in einer Umfangsrichtung der Behälter kann bestimmt werden, um welchen Winkel bzw. welche Strecke und in welche Richtung die Behälter vor dem Aufbringen des ersten bzw. des zweiten Kennzeichnungselements gedreht werden müssen, um die Abweichung zu korrigieren. Befinden sich die Behälter beim Aufbringen des ersten bzw. des zweiten Kennzeichnungselements prinzipiell in Bewegung, insbesondere in einer Drehbewegung, so kann die Korrektur auch durch Anpassen eines Zeitpunktes des Aufbringens des ersten bzw. des zweiten Kennzeichnungselements auf die Behälter erfolgen. Ebenso ist eine Kombination dieser Korrekturen möglich. Da die Korrektur der Drehlage bzw. des Zeitpunkts auf der Grundlage einer mittleren Abweichung erfolgt, ist das beschriebene Verfahren bei gleichzeitig ausreichend guter Verbesserung der Lage der Kennzeichnungselemente deutlich weniger aufwändig und konstruktiv einfacher umzusetzen.

Gemäß einer Weiterbildung kann die statistische Auswertung das Bestimmen einer, insbesondere mittleren, Abweichung der erfassten Istwerte von einem Sollwert der Lage in einer Längsrichtung der Behälter umfassen, wobei die Korrektur eine vertikale Verschiebung der Behälter und/oder des ersten bzw. zweiten Kennzeichnungsaggregats umfasst. Analog zu der obigen Darstellung können die Istwerte und der Sollwert der Lage bezüglich einer Behälterkontur oder einer Markierung, welche wie oben beschrieben auch unabhängig von den Behältern gewählt werden kann, erfasst und angegeben werden. Bei der Erfassung der Lage in einer Längsrichtung der Behälter wird jedoch bevorzugt eine Streckenangabe gewählt. Ebenso kann bei Behältern, bei denen sich die Längsrichtung nicht bereits aus der Behälterform, wie beispielsweise bei Flaschen oder Dosen, ergibt, die Längsrichtung als Richtung parallel zur Drehachse der Behälteraufnahmen definiert werden.

Falls die Transportvorrichtung eine Höhenverstellbarkeit der Behälteraufnahmen, einzeln oder als Gesamtheit, beispielsweise über eine Höhenverstellung des Behältertisches, vorsieht, so kann eine Korrektur der Abweichung in der Längsrichtung der Behälter durch eine vertikale Verschiebung der Behälter mittels einer vertikalen Verschiebung der Behälteraufnahmen bewerkstelligt werden. Alternativ oder ergänzend können das erste bzw. zweite Kennzeichnungsaggregat vertikal verschoben werden, falls diese dazu entsprechend konstruktiv ausgebildet sind.

Die Korrektur durch Drehen der Behälter und/oder durch eine vertikale Verschiebung der Behälter und/oder der Kennzeichnungsaggregate kann insbesondere automatisch durch das Steuer-und/oder Regelsystem vorgenommen werden, beispielsweise, indem entsprechend steuerbare Motoren wie unten genauer beschrieben angesteuert werden.

Die oben genannten Aufgaben werden auch gelöst durch eine Maschine zum Kennzeichnen, insbesondere zum Etikettieren und/oder Bedrucken, von Behältern mit wenigstens einem Kennzeichnungselement, insbesondere einem Etikett und/oder einem Aufdruck, umfassend: eine Transportvorrichtung, insbesondere eine Rundläufermaschine, mit einer Vielzahl von um Drehachsen drehbar angeordneten Behälteraufnahmen für je einen Behälter zum Transport der Behälter entlang einer Transportstrecke; ein erstes Kennzeichnungsaggregat, das an der Transportstrecke angeordnet ist, zum Aufbringen jeweils eines ersten Kennzeichnungselements auf eine Außenfläche der Behälter; und eine erste Sensoreinheit, die stromabwärts des ersten Kennzeichnungsaggregats angeordnet und dazu ausgebildet ist, die Lage des auf den jeweiligen Behälter aufgebrachten ersten Kennzeichnungselements als Istwert zu erfassen, wobei ein Steuer- und/oder Regelsystem vorgesehen ist, das dazu ausgebildet ist, die erfassten Istwerte der Lage des ersten Kennzeichnungselements für eine Vielzahl von Behältern statistisch auszuwerten, um die statistische Auswertung auf der Grundlage von wenigstens 30 erfassten Istwerten, bevorzugt wenigstens 300 erfassten Istwerten vorzunehmen, und eine Korrektur des Aufbringens des ersten Kennzeichnungselements bezüglich der Lage des ersten Kennzeichnungselements auf der Grundlage der statistischen Auswertung vorzunehmen.

Dieselben Variationen und Weiterbildungen, die oben im Zusammenhang mit dem erfindungsgemäßen Verfahren zum Kennzeichnen von Behältern beschrieben wurden, können auch auf die Maschine zum Kennzeichnen von Behältern angewendet werden. Insbesondere können die Kennzeichnungselemente vorgedruckte Etiketten, Etiketten zum Aufdrucken eines, insbesondere zusätzlichen, Aufdrucks, oder Aufdrucke sein. Entsprechend können die Kennzeichnungsaggregate als Etikettieraggregate und/oder Druckaggregate ausgebildet sein.

Sowohl Etikettieraggregate als auch Druckaggregate sind im Stand der Technik wohlbekannt, sodass hier auf eine ausführliche Beschreibung verzichtet werden darf.

Ein Etikettieraggregat kann beispielsweise zwei Etikettenbandrollen aufweisen, von denen ein Etikettenband gesteuert abgezogen und mittels einer Schneideinrichtung in einzelne Etiketten zerschnitten wird. Die abgetrennten Etiketten, die sich während des Schneidvorgangs mit dem Druckbild nach außen auf einer rotierenden Vakuumwalze befinden können, werden nach dem Schneidvorgang an einen Vakuumzylinder des Etikettieraggregats übergeben, von wo aus sie mit der Rückseite nach außen an einer Leimwalze vorbeigeführt und in einem bestimmten, typabhängigen Bereich des Etiketts mit Leim versehen werden können. Die mit Leim versehenen Etiketten können dann tangential der Rundläufermaschine, d.h. dem Karussell der Behälteraufnahmen, auf denen sich die Behälter befinden, zugeführt werden. Die zu applizierenden Etiketten werden dabei mit der Beleimung mit den Behältern in Berührung gebracht und durch geeignete Bewegung der Behälter, beispielsweise durch Drehen der Behälter, auf diese abgewickelt.

Eine Vielzahl alternativer Weiterbildungen von Etikettieraggregaten sind im Stand der Technik bekannt und können bei der erfindungsgemäßen Maschine als Kennzeichnungsaggregat eingesetzt werden. Beispielsweise kann der Leim über ein Palettenkarussell auf die Etiketten aufgetragen werden. Dabei sind auf einem sich drehenden Träger des Karussells mehrere Entnahmeelemente, sogenannte Paletten, drehbar angeordnet. Bei der Rotation des Palettenkarussells wälzt sich die Aufnahmefläche eines jeden Entnahmeelements an der beleimten Oberfläche einer Leimwalze ab, entnimmt einem Etikettenbehälter durch Haftwirkung ein Etikett, wobei dieses auf der Rückseite beleimt wird, und übergibt es an einen Greiferzylinder, der es auf die Behälter überträgt. Auch hier wird durch geeignetes Drehen der von den Drehtellern als Behälteraufnahmen aufgenommenen Behälter ein Abrollen des von dem Greiferzylinder zugeführten zu applizierenden Etiketts auf die Oberfläche des Behälters bewirkt. Das auf den Behälter aufgebrachte Etikett kann anschließend mit Bürsten an den Behälter angedrückt werden.

Die von den Paletten aus dem Etikettenbehälter entnommenen Etiketten werden an den Greiferzylinder übergeben. Dieser nimmt das jeweilige Etikett mittels eines Greiferelements, eines sogenannten Greiferfingers und eines Ambosses, von der Palette ab, wobei die beleimte Seite des Etiketts auf einem Greiferschwamm zu liegen kommt. Die Bewegung der an Greiferhebeln gelagerten Greiferfinger wird dabei durch das Abrollen der ebenfalls an den Greiferhebeln befestigten Greiferrollen auf einer Steuerkurve des Greiferzylinders bewirkt. Zur Übergabe der Etiketten an die Behälter werden die Greiferfinger erneut geöffnet. Anstelle der Leimwalze kann ein steuerbarer Leimdrucker verwendet werden, um ein variables Druckbild auf die Anlagefläche der Palette aufzudrucken. Alternativ kann das Druckbild direkt auf die zu beleimende Seite des Etiketts aufgedruckt werden.

Wie oben bereits erwähnt weist die erfindungsgemäße Maschine somit neben der Vielzahl von Behälteraufnahmen weitere umlaufende bzw. rotierende Maschinenteile auf, deren korrekte Justierung einen Einfluss auf das lagerichtige Aufbringen der Etiketten auf die Behälter hat. Beispielsweise ist der Zeitpunkt des oben erwähnten erneuten Öffnens der Greiferfinger entscheidend für die Lage des auf die sich drehenden Behälter übergebenen Etiketts bezüglich einer Umfangsrichtung der Behälter. Dabei können Komponenten des Etikettieraggregats ebenfalls eine Vielzahl gleichartiger Elemente, beispielsweise die zuvor erwähnten Paletten und/oder Greiferelemente, aufweisen, die durch ihre jeweilige relative Justierung einen individuellen Einfluss auf die Lage der aufgebrachten Etiketten haben können. Dabei ist die jeweilige Anzahl der gleichartigen Elemente im Allgemeinen verschieden von der Anzahl der Behälteraufnahmen der Rundläufermaschine. Durch die oben erwähnte statistische Auswertung, insbesondere mittels Fourier-Analyse, können jedoch wie oben beschrieben periodisch auftretende Abweichungen leicht detektiert und zugeordnet werden.

Des Weiteren sind auch Druckaggregate zum direkten Aufdrucken eines Aufdrucks, d.h. eines Druckbildes, auf die Außenfläche der Behälter im Stand der Technik bekannt. Dabei kann wie bereits erwähnt ein einzelnes Druckwerk mit mindestens einem Druckkopf als Kennzeichnungsaggregat vorgesehen sein. Alternativ können mehrere Druckköpfe, beispielsweise für verschiedene Farben, als Teil des Kennzeichnungsaggregats oder in separaten Kennzeichnungsaggregaten vorgesehen sein. Das aufgedruckte Druckbild kann beispielsweise Schriftzeichen, Logos, Muster und/oder Farbverläufe aufweisen. Die jeweilige Druckfarbe kann nach dem Inkjet-Verfahren auf den Behälter aufgedruckt werden. Dabei kann nach dem Aufbringen jeder einzelnen Druckfarbe eine Fixierung, beispielsweise durch Trocknen mittels Warmluft, Infrarot-Strahlung, UV-Strahlung, Mikrowellen, Elektronenstrahlen und dergleichen, erfolgen. Alternativ dazu kann ein Mehrfarbendruckbild mit einem oder mehreren Druckköpfen nach dem Prinzip des "wet in wet printing" in einem einzigen Druckprozess erzeugt und anschließend fixiert werden.

Die erste Sensoreinheit kann wie oben erwähnt beispielsweise eine Kamera sein, die eine Aufnahme von dem auf den Behälter aufgebrachten ersten Kennzeichnungselement macht. Bei der ersten sowie möglichen weiteren Sensoreinheiten kann es sich um eine Digitalkamera, wie beispielsweise eine Matrixkamera oder eine Zeilenkamera, handeln. Die Kamera kann als Schwarz/Weiß- und/oder Farbkamera ausgeführt sein. Als Sensoreinheit kann ein CCD- Sensor oder ein CMOS-Sensor eingesetzt werden. Alternativ können optische 3D-Sensoren/Kameras verwendet werden. Diese können auf einer Laufzeitmessung, einem Triangulationsverfahren, Interferometrie, Fokus oder Schattenwurf beruhen.

Die erste Sensoreinheit, wie auch die weiteren Sensoreinheiten, kann über eine eigene Verarbeitungseinheit, d.h. Recheneinheit, zur Weiterverarbeitung der Sensorsignale verfügen. Alternativ oder zusätzlich kann die jeweilige Sensoreinheit über eine Übertragungseinrichtung verfügen, die dazu ausgebildet ist, Daten bzw. Informationen bzw. Messwerte drahtlos, etwa über WLAN, Bluetooth oder NFC, und/oder via LAN, etwa über Ethernet, an eine Auswerteeinrichtung, beispielsweise eine Prozessoreinrichtung und/oder einen Rechner bzw. PC und/oder ein mobiles Endgerät wie ein Smartphone und/oder einen zentralen Rechner zu übermitteln. Die Auswerteeinrichtung kann insbesondere als Teil einer Steuer- und/oder Regeleinheit des zuvor erwähnten Steuer- und/oder Regelsystems vorgesehen sein. Die jeweilige Sensoreinheit ist bevorzugt mit einem Speicher ausgerüstet, der Bilder speichert und/ oder zwischenspeichert, um Aufnahmen oder Messergebnisse, die an verschiedenen Orten gewonnen wurden, miteinander korrelieren zu können. Besonders bevorzugt werden zusätzlich Winkelstellung des Karussells sowie Drehstellung der Behälteraufnahmen gespeichert und/oder mitverfolgt.

Die Transportvorrichtung kann wie oben erwähnt insbesondere als Rundläufermaschine bzw. Karussell ausgebildet sein, auf welchem eine Vielzahl von drehbar angeordneten Behälteraufnahmen auf einer Kreisbahn umlaufen. Das Karussell kann gleich einem Rotor mittels eines, insbesondere steuerbaren, Elektromotors angetrieben werden. Die Behälteraufnahmen können beispielsweise als Behälterteller bzw. Drehteller ausgebildet sein. Die Behälteraufnahmen können entlang regelmäßiger Winkelsegmente an dem Karussell angeordnet sein. Zusätzlich kann eine Zentriervorrichtung, beispielsweise eine Zentrierglocke, pro Behälteraufnahme vorgesehen sein, die dazu ausgebildet ist, einen Kopfbereich des Behälters, beispielsweise einer Flasche, aufzunehmen und den Behälter gegen die Behälteraufnahme zu pressen.

Das Steuer- und/oder Regelsystem der Maschine ist ferner dazu ausgebildet, die erfassten Istwerte statistisch auszuwerten. Hierzu kann das Steuer- und/oder Regelsystem eine Steuer-und/oder Regeleinheit mit einem Mikroprozessor oder einer ähnlichen Prozessoreinheit und einer Speichereinheit aufweisen. In der Speichereinheit können Parameter und/oder Kurven zur Ansteuerung entsprechender Antriebe und/oder Stellelemente bzw. Stellmotoren der Transportvorrichtung und/oder der Kennzeichnungsaggregate wie weiter unten genauer beschrieben abgelegt sein. Die Parameter und/oder Kurven können insbesondere in der Art einer Sortenverwaltung für verschiedene Behältertypen und/oder Typen der Kennzeichnungselemente, beispielsweise Etikettentypen, in der Speichereinheit gespeichert sein.

Das Steuer- und/oder Regelsystem ist weiterhin dazu ausgebildet, eine Korrektur des Aufbringens des ersten Kennzeichnungselements auf der Grundlage der statistischen Auswertung vorzunehmen. Dazu umfasst das Steuer- und/oder Regelsystem eine oder mehrere steuerbare Stellvorrichtungen bzw. Stellelemente, die eine relative Lage der Behälter zu den Kennzeichnungsaggregaten verändern können. Diese Stellvorrichtungen können als Teil der Transportvorrichtung und/oder der Kennzeichnungsaggregate vorgesehen sein. Beispielhafte Ausführungen der Stellvorrichtungen werden unten genauer beschrieben.

Das Steuer- und/oder Regelsystem kann ferner dazu ausgebildet sein, als Teil der statistischen Auswertung einen Mittelwert und/oder eine Streuung der erfassten Istwerte zu bestimmen und/oder periodisch auftretende Abweichungen der erfassten Istwerte von einem Sollwert, bevorzugt mittels Fourier-Analyse, zu detektieren. Dieselben Weiterbildungen und Variationen, die bereits oben beschrieben wurden, finden auch hier Anwendung. Die statistische Auswertung kann insbesondere mittels der Prozessoreinheit der oben erwähnten Steuer- und/oder Regeleinheit erfolgen.

Erfindungsgemäß umfasst die Maschine weiterhin wenigstens eine Positionserfassungseinheit zum Erfassen einer absoluten Position wenigstens einer Behälteraufnahme entlang der Transportstrecke, wobei das Steuer- und/oder Regelsystem ferner dazu ausgebildet ist, erfasste Istwerte basierend auf einem Signal der wenigstens einen Positionserfassungseinheit den jeweiligen Behälteraufnahmen zuzuordnen. Die Positionserfassungseinheit kann beispielsweise als Drehgeber bzw. Drehimpulsgeber an dem Karussell, insbesondere an einem das Karussell antreibenden Elektromotor, ausgebildet sein. Alternativ kann ein Positionserfassungssensor, beispielsweise stromaufwärts des ersten bzw. zweiten Kennzeichnungsaggregats am Karussell vorgesehen sein, um eine zeitliche Korrelation zwischen dem Aufbringen des Kennzeichnungselements und der Bewegung der Behälteraufnahmen auf der Kreisbahn zur Zuordnung der erfassten Istwerte zu den Behälteraufnahmen zu nutzen. Ein solcher Positionserfassungssensor kann optisch, beispielsweise als Lichtschranke, magnetisch oder elektrisch, beispielsweise als Kontaktsensor, oder nach einer anderen im Stand der Technik bekannten Art ausgebildet sein. Es versteht sich, dass die Maschine mehrere Positionserfassungseinheiten, insbesondere entlang der Transportstrecke, aufweisen kann, um die Behälteraufnahmen im Zulauf bzw. im Auslauf der jeweiligen Kennzeichnungsaggregate lokalisieren zu können. Des Weiteren kann die Positionserfassungseinheit zum Erfassen eines eindeutigen Identifizierungscodes ausgebildet sein, über den die jeweilige Behälteraufnahme identifiziert werden kann. Beispielsweise kann ein Barcode an der Behälteraufnahme optisch erfasst werden oder ein Identifizierungscode elektromagnetisch, in der Art eines Transponders, erfasst werden.

Gemäß einer speziellen Weiterbildung kann das Steuer- und/oder Regelsystem ferner dazu ausgebildet sein, wenigstens eine Behälteraufnahme der Transportvorrichtung zu bestimmen, für die eine Abweichung des zugehörigen erfassten Istwertes von einem Sollwert der Lage des ersten Kennzeichnungselements einen konfigurierbaren Grenzwert übersteigt, wobei insbesondere die zugehörige Behälteraufnahme über ein akustisches und/oder optisches Signal eines akustischen und/oder optischen Signalgebers gekennzeichnet und/oder in einer Anzeigeeinrichtung des Steuer- und/oder Regelsystems angezeigt werden kann. Erneut sei hervorgehoben, dass die erwähnte Bestimmung einer Abweichung um mehr als einen konfigurierbaren Grenzwert erst durch die statistische Auswertung, beispielsweise durch das Detektieren periodisch auftretender Abweichungen, ausgelöst wird, nicht aber prinzipiell für jede Behälteraufnahme durchgeführt wird. In Kombination mit den Signalen der oben beschriebenen Positionserfassungseinheit lässt sich ein solcher Istwert eindeutig einer Behälteraufnahme zuordnen, sodass eine Korrektur der Lage, beispielsweise durch gezieltes Drehen dieser Behälteraufnahme, spezifisch für diese Behälteraufnahme durchgeführt werden kann.

Dazu kann wie oben beschrieben beispielsweise ein akustisches Warnsignal ertönen, wenn sich die entsprechende Behälteraufnahme vor dem jeweiligen Kennzeichnungsaggregat befindet. Alternativ oder ergänzend kann die Behälteraufnahme durch ein optisches Signal, beispielsweise durch Anstrahlen mit einem Scheinwerfer oder einem Lasermarker, für einen Bediener eindeutig gekennzeichnet werden. Alternativ oder ergänzend kann, insbesondere falls der oben erwähnte Identifizierungscode erfasst wurde, die zugehörige Behälteraufnahme in einer Anzeigeeinrichtung, beispielsweise einem Touch-Display, des Steuer- und/oder Regelsystems angezeigt werden. Der Bediener kann anschließend, insbesondere manuell, eine Korrektur der Lage für die entsprechende Behälteraufnahme vornehmen.

Des Weiteren können eine oder mehrere Positionserfassungseinheiten zum Erfassen einer absoluten Position weiterer rotierender bzw. umlaufender Elemente, beispielsweise der zuvor erwähnten Greiferelemente und/oder Paletten, vorgesehen sein, sodass die erfassten Istwerte zusätzlich bestimmten Greiferelementen und/oder Paletten zugeordnet werden können. Dadurch kann eine spezifische Korrektur der Lage der Kennzeichnungselemente in Bezug auf mögliche Fehlstellungen einzelner Greiferelemente und/oder Paletten vorgenommen werden. Auch hier können die jeweiligen Elemente akustisch und/oder optisch gekennzeichnet werden und/oder in der Anzeigeeinrichtung angezeigt werden.

Gemäß einer Weiterbildung kann das Steuer- und/oder Regelsystem wenigstens einen Servomotor zum gesteuerten Drehen der Behälter um eine Behälterlängsachse umfassen, wobei das Steuer- und/oder Regelsystem ferner dazu ausgebildet ist, die Behälter mittels des wenigstens einen Servomotors auf der Grundlage der statistischen Auswertung vor dem Aufbringen des ersten Kennzeichnungselements, insbesondere um einen für die jeweilige Behälteraufnahme spezifischen Winkel, zu drehen. Die Transportvorrichtung kann entweder einen gemeinsamen Antrieb zum Drehen der Behälteraufnahmen um ihre jeweilige Drehachse oder individuelle Antriebe zum Drehen jeweils einer Behälteraufnahme um ihre jeweilige Drehachse aufweisen. Insbesondere kann jeder Behälteraufnahme ein eigener Servomotor zugeordnet sein, der die Behälteraufnahme unabhängig von den anderen Behälteraufnahmen drehen kann. Alternativ kann ein Servomotor über ein Getriebe mit mehreren Behälteraufnahmen verbunden sein. Anstelle der Servomotoren können auch Schrittmotoren vorgesehen sein. Die Motoren können über eigene Drehgeber und/oder Hall-Sensoren verfügen, um eine relative und/oder absolute Drehstellung der Behälteraufnahmen zu bestimmen.

Auf der Grundlage der statistischen Auswertung steuert das Steuer- und/oder Regelsystem den Servomotor derart an, dass eine fehlerhafte Drehstellung des zu kennzeichnenden Behälters vor dem Aufbringen des Kennzeichnungselements korrigiert wird. Beispielsweise kann vor dem Aufbringen des Kennzeichnungselements gesteuert eine Drehung um die Abweichung eines Mittelwerts der erfassten Istwerte von einem Sollwert bezüglich der Umfangsrichtung des Behälters erfolgen, wobei zusätzlich die Richtung beachtet wird, in die gedreht werden soll. Dadurch kann bewirkt werden, dass die Istwerte der Lage des jeweiligen Kennzeichnungselements um den Sollwert als Mittelwert streuen.

Gemäß einer Weiterbildung kann das Steuer- und/oder Regelsystem wenigstens eine motorische Höhenverstellung der Behälteraufnahmen und/oder des ersten Kennzeichnungsaggregats umfassen, wobei das Steuer- und/oder Regelsystem ferner dazu ausgebildet ist, eine relative Höhe zwischen den Behältern und dem ersten Kennzeichnungsaggregat mittels der wenigstens einen motorischen Höhenverstellung auf der Grundlage der statistischen Auswertung vor dem Aufbringen des ersten Kennzeichnungselements, insbesondere um einen für die jeweilige Behälteraufnahme spezifischen Höhenversatz, zu verändern. Wie oben erwähnt können die Behälteraufnahmen mit individuellen Servomotoren oder Schrittmotoren versehen sein, die ein individuelles Drehen der Behälteraufnahmen gestatten. Alternativ oder ergänzend können die Behälteraufnahmen mit individuellen Linearstellantrieben, Spindelantrieben oder anderen individuellen vertikalen Stellelementen ausgestattet sein, die zum Verändern der Höhe der jeweiligen Behälteraufnahme von einer Steuer- und/oder Regeleinheit des Steuer- und/oder Regelsystems angesteuert werden können. Zur gemeinsamen Höhenverstellung aller Behälteraufnahmen kann ein gemeinsames vertikales Element vorgesehen sein, beispielsweise ein oder mehrere Spindelantriebe, mittels derer der Behältertisch in seiner Höhe gesteuert verändert werden kann. Des Weiteren können das erste und jedes weitere Kennzeichnungsaggregat mit einer eigenen motorischen Höhenverstellung ausgestattet sein. Denkbar ist auch die Anordnung eines oder mehrerer Kennzeichnungsaggregate und/oder des Behältertisches an jeweils eigenen parallelkinematischen Verstelleinrichtungen bzw. Getrieben nach dem Hexapod-System wie in der Figur 4 der EP 1 561 690 B1 gezeigt. Hierdurch lässt sich eine Verstellbarkeit nicht nur bezüglich der jeweiligen Höhe, sondern auch bezüglich weiterer Freiheitsgrade realisieren.

Die Veränderung der relativen Höhe zwischen den Behältern und dem ersten Kennzeichnungsaggregat kann dauerhaft erfolgen, beispielsweise um eine mittlere Abweichung der erfassten Istwerte von einem Sollwert zu korrigieren. Alternativ oder ergänzend kann die Veränderung der relativen Höhe, insbesondere zwischen einzelnen Behälteraufnahmen und dem ersten Kennzeichnungsaggregat, vorübergehend erfolgen, wobei die im Zulauf zum ersten Kennzeichnungsaggregat gemachte Höhenveränderung nach dem Aufbringen des ersten Kennzeichnungselements zumindest teilweise wieder rückgängig gemacht wird.

Es versteht sich, dass das Steuer- und/oder Regelsystem für das Aufbringen des zweiten Kennzeichnungselements mittels des zweiten Kennzeichnungsaggregats, falls ein solches vorgesehen ist, äquivalente Korrekturen der Lage des zweiten Kennzeichnungselements in Umfangsrichtung und/oder Längsrichtung durch Ansteuern entsprechender Stellelemente durchführen kann. Ebenso kann durch das Steuer- und/oder Regelsystem, insbesondere im Fall eines Druckaggregats, der Zeitpunkt des Aufbringens der Kennzeichnungselemente auf die Behälter gezielt beeinflusst werden, um auf der Grundlage der statistischen Auswertung bestimmte Abweichungen zu korrigieren.

So kann das erste Kennzeichnungsaggregat beispielsweise einen Greiferzylinder zum Aufbringen von Etiketten als erstes Kennzeichnungselement auf die Außenfläche der Behälter umfassen, wobei das Steuer- und/oder Regelsystem dazu ausgebildet ist, durch Ansteuern des Greiferzylinders einen Zeitpunkt des Aufbringens des ersten Kennzeichnungselements auf den jeweiligen Behälter auf der Grundlage der statistischen Auswertung anzupassen. Beispielsweise kann über steuerbar schaltbare Greiferfinger der Zeitpunkt beeinflusst werden, zu dem ein mitgeführtes Etikett durch Öffnen des jeweiligen Greiferfingers übergeben wird.

Eine Vielzahl weiterer und alternativer Stellelemente sind denkbar und von der vorliegenden Erfindung mit umfasst, soweit sie durch eine Steuer- und/oder Regeleinheit gesteuert einen Einfluss auf die Lage des Kennzeichnungselements auf den Behälter haben.

Das Steuer- und/oder Regelsystem kann zudem eine Schlupfüberwachung mittels an Zentrierglocken angeordneter Sensoren zur Drehwinkelerfassung für eine Schlupfkontrolle der von den Behälteraufnahmen transportierten Behälter umfassen. Das Steuer- und/oder Regelsystem kann weiterhin eine Sprachsteuerung aufweisen.

Die oben beschriebenen Weiterbildungen sind insbesondere für den Hochleistungsbetrieb beim Kennzeichnen, beispielsweise Etikettieren, von Behältern geeignet. Aufgrund der statistischen Auswertung erfolgt eine zuverlässige und auch für hohe Durchsätze geeignete Korrektur von Abweichungen von der Solllage der Kennzeichnungselemente. Da die oben erwähnten Grenzwerte für die Abweichungen konfigurierbar sind und insbesondere für den Behältertyp und/oder Typ des Kennzeichnungselements individuell vorgegeben werden können, kann je nach Wunsch des Betreibers ein entsprechender Toleranzbereich vorgegeben werden. Die beschriebenen Maschinen und Verfahren korrigieren zuverlässig systematische Abweichungen, auch solche, die durch einzelne Maschinenteile verursacht werden, sodass das Produktionsergebnis zuverlässig innerhalb des Toleranzbereiches liegt.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.
Figur 1 stellt eine schematische Draufsicht einer Etikettiermaschine gemäß der vorliegenden Erfindung dar.
Figur 2stellt eine schematische Detailansicht einer Behälteraufnahme im Bereich eines Etikettieraggregats in einer Seitenansicht dar.
Figur 3 stellt die Ergebnisse einer Messreihe zur Abweichung der erfassten Istwerte von einer Solllage eines Etiketts in Längsrichtung des Behälters dar.
Figur 4 stellt die Ergebnisse der Messreihe der Figur 3 verschoben um die mittlere Abweichung dar.

Im Folgenden sind gleiche oder gleichartige Elemente mit gleichen Bezugszeichen bezeichnet. Auf eine wiederholte Beschreibung dieser Elemente wird aus Gründen der Klarheit verzichtet.

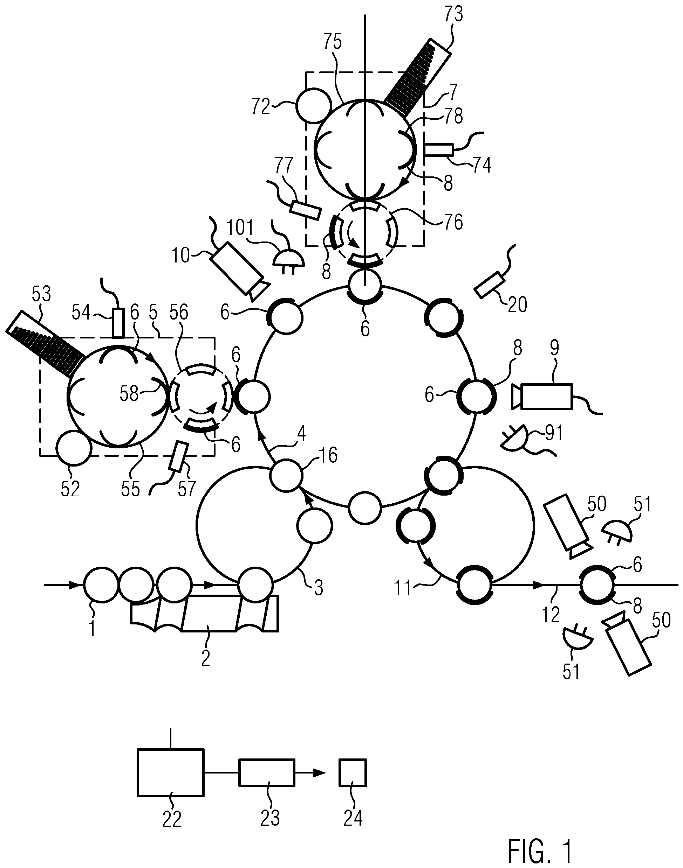

Figur 1 stellt eine schematische Draufsicht auf eine Maschine zum Kennzeichnen von Behältern durch Etikettieren gemäß der vorliegenden Erfindung dar. Es versteht sich, dass die im Zusammenhang mit der Figur beschriebene Weiterbildung der Einfachheit halber auch optionale Elemente aufweist, die entfallen oder durch andere Elemente ersetzt werden können.

Bei der dargestellten, nicht limitierenden Weiterbildung laufen die Behälter 1 wie an sich bekannt über eine Einteilschnecke 2 und einen Einlaufstern 3 zu den Behälteraufnahmen 16 eines Behältertischs 4. Die Behälteraufnahmen 16 transportieren die Behälter 1 zwischen dem Einlaufstern 3 und dem Auslaufstern 11 entlang einer Transportstrecke, wobei gemäß der dargestellten Weiterbildung zwei Etikettieraggregate 5 und 7 derart an der Transportstrecke angeordnet sind, dass von ihnen jeweils ein Rumpfetikett 6 und ein Rückenetikett 8 auf die Behälter 1 aufgebracht werden kann.

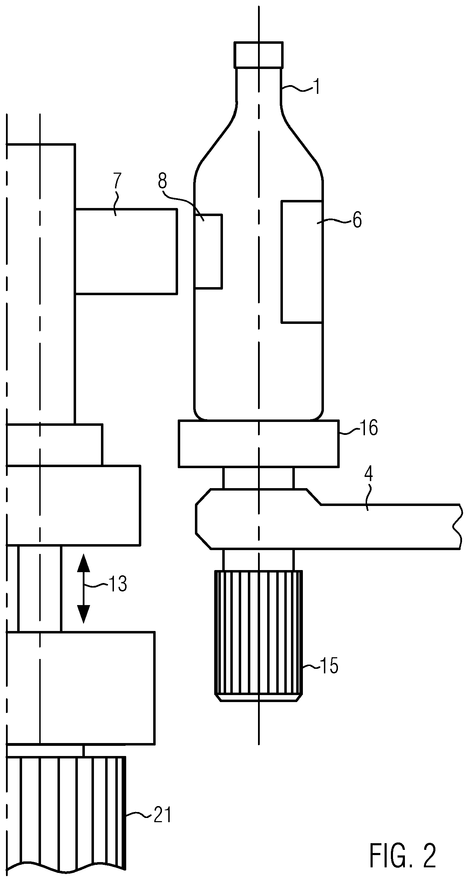

Das nicht limitierende Beispiel eines Rumpfetiketts 6 und eines Rückenetiketts 8 wurde hier gewählt, um eine wünschenswerte relative Lage der beiden Etiketten als Sollwert zu demonstrieren. Für eine ansprechende Produktpräsentation soll das Rückenetikett beispielsweise genau gegenüber dem Rumpfetikett auf einer Flasche 1 aufgebracht werden. Auch eine bestimmte relative Höhe der beiden Etiketten zueinander und zum Behälterboden, wie in Figur 2 angedeutet, ist im Allgemeinen vom Betreiber oder Kunden vorgegeben.

Das Rumpfetikett 6 und das Rückenetikett 8 werden gemäß der dargestellten, nicht limitierenden Weiterbildung mittels zweier nacheinander an der Transportstrecke angeordneter Etikettieraggregate 5 und 7 auf die Behälter 1 aufgebracht. Die vorliegende Erfindung ist jedoch nicht auf die Kombination zweier Etikettieraggregate beschränkt, sondern umfasst jede beliebige der oben beschriebenen Weiterbildungen. In der hier dargestellten Weiterbildung ist das Etikettieraggregat 5 als erstes Kennzeichnungsaggregat an der Transportstrecke zum Aufbringen eines Rumpfetiketts 6 als erstes Kennzeichnungselement angeordnet. Stromabwärts vom Etikettieraggregat 5 ist ein weiteres Etikettieraggregat 7 als zweites Kennzeichnungsaggregat zum Aufbringen eines Rückenetiketts 8 als zweites Kennzeichnungselement angeordnet. Es versteht sich jedoch, dass auch das Etikettieraggregat 7 als erstes Etikettieraggregat im Sinne der oben beschriebenen Weiterbildungen angesehen werden kann.

In der hier dargestellten, nicht limitierenden Weiterbildung umfasst das erste Etikettieraggregat 5 einen Etikettenbehälter 53, der die Rumpfetiketten 6 zur Übernahme durch die Paletten 58 eines Palettenkarussells 55 bereitstellt. Vor der Übernahme der Etiketten wird die Anlagefläche der Paletten im Kontakt mit einer Leimwalze 52 beleimt, sodass die Etiketten bei der Übernahme vom Etikettenbehälter 53 automatisch beleimt werden. Mittels eines Sensors 54, beispielsweise einer Lichtschranke, wird die genaue Position der Paletten des Palettenkarussells 55 zu Steuerungszwecken überwacht. Beispielsweise kann ein Signal des Sensors 54 wie oben beschrieben zur Zuordnung erfasster Istwerte der Lage des auf die Behälter 1 aufgebrachten Rumpfetiketts 6 zu den jeweiligen Paletten verwendet werden.

Von der Palette wird das Etikett an einen Greiferzylinder 56 wie an sich bekannt übergeben. Auch am Greiferzylinder 56 kann ein Sensor 57, beispielsweise eine Lichtschranke, vorgesehen sein, mittels dessen eine genaue Position der Greiferelemente bzw. der von ihnen mitgeführten Etiketten überwacht wird. Die Sensoren 54 und 57 stellen somit beispielhafte Ausführungen der oben erwähnten Positionserfassungseinheiten zum Erfassen einer absoluten Position einer Palette bzw. eines Greiferelements dar.

Von dem Greiferzylinder 56 werden die mit der beleimten Seite nach außen mitgeführten Rumpfetiketten 6 durch Öffnen des jeweiligen Greiferfingers auf die Behälter aufgebracht. Dabei kann wie oben erwähnt durch Ansteuern des Greiferfingers der Zeitpunkt der Übergabe an die Behälter verändert werden. Bei Etikettieraggregaten 5 mit einem Übergabezylinder, wie dem Greiferzylinder 56, beispielsweise bei Kaltleim- oder Contiroll-Aggregaten, und einem motorischen Aggregatantrieb kann eine mögliche Korrektur der Etikettenübergabe durch Anpassung des Übergabezeitpunktes bzw. entsprechende Verdrehung des Übergabezylinders 56 zum Behälter mittels eines nicht dargestellten Servomotors am Etikettieraggregat 5 erfolgen.

Die übergebenen Rumpfetiketten 6 werden anschließend angebürstet und/oder angerollt, um einen sicheren Halt auf der Behälteraußenfläche zu garantieren. Anschließend können die Behälter durch gezielte Drehung der Behälteraufnahmen derart gedreht werden, dass die Rumpfetiketten 6 möglichst genau nach außen zeigen, so wie es in der Figur 1 angedeutet ist. Anders ausgedrückt werden die Behälter nach dem Etikettieren mit den Rumpfetiketten in eine für das Erfassen der Lage der Rumpfetiketten auf den Behältern günstige Drehlage gedreht.

Gemäß der dargestellten, nicht limitierenden Weiterbildung ist eine Kamera 10 mit zugeordneter Beleuchtungseinrichtung 101, beispielsweise einer LED-Lampe, stromabwärts von dem ersten Etikettieraggregat 5 an der Transportstrecke angeordnet, um Kontrollaufnahmen der auf die Behälter aufgebrachten Rumpfetiketten zu machen. Anhand der von der Kamera 10 gemachten Kontrollaufnahmen wird der Istwert der Lage des Rumpfetiketts auf dem Behälter erfasst, beispielsweise indem die Kontrollaufnahmen mittels einer Prozessoreinheit verarbeitet werden. Dabei erfolgt wie oben im Detail beschrieben eine statistische Auswertung der erfassten Istwerte, welche zu einer Korrektur des Aufbringens des Rumpfetiketts auf nachfolgende Behälter verwendet wird. Weicht beispielsweise eine Mittellinie des Rumpfetiketts 6 von einer Bildmitte der gemachten Kontrollaufnahmen im Mittel um einen Betrag ab, der größer als ein von einem Kunden vorgegebener Grenzwert ist, so werden die von dem Einlaufstern 3 übernommenen Behälter durch gezieltes Drehen der zugehörigen Behälteraufnahmen bereits vor Erreichen des ersten Etikettieraggregats 5 um diesen mittleren Betrag in die Gegenrichtung gedreht, sodass die Mittellinie der nachfolgenden Rumpfetiketten wieder zentral in der Bildmitte liegt. Dabei können wie oben beschrieben auch individuelle Fehlstellungen auf der Grundlage der statistischen Auswertung korrigiert werden.

Zwischen der Position der Kamera 10 und dem Aufbringen des Rückenetiketts 8 werden die Flaschen 1 wie in der Figur 1 angedeutet um 180° gedreht, sodass das Rückenetikett 8 bei korrekter Lage des Rumpfetiketts 6 genau mittig gegenüber dem Rumpfetikett aufgebracht wird. In der dargestellten, nicht limitierenden Weiterbildung weist auch das zweite Etikettieraggregat 7 einen Etikettenbehälter 73, diesmal für Rückenetiketten, auf, von dem mittels Paletten 78 eines Palettenkarussells 75, deren Anlageflächen über eine Leimwalze 72 beleimt werden, jeweils einzelne Rückenetiketten übernommen werden. Auch hier ist ein Sensor 74 zum Erfassen der genauen Position der Paletten vorgesehen.

Von den Paletten 78 werden die Rückenetiketten mit ihrer Bildseite an einen Greiferzylinder 76 übergeben, wobei auch hier ein Sensor 77 zum Erfassen der genauen Position der Greiferelemente vorgesehen ist. Durch, insbesondere gesteuertes, Öffnen der zugehörigen Greiferfinger werden die mitgeführten Rückenetiketten dann mit ihrer beleimten Rückseite auf die Behälteraußenfläche aufgebracht. Auch hier werden die aufgebrachten Rückenetiketten anschließend angebürstet und/oder angerollt.

Exemplarisch ist in der Figur 1 stromabwärts von dem zweiten Etikettieraggregat 7 ein Sensor 20, beispielsweise eine Lichtschranke, an der Transportstrecke angeordnet, mit dem die genaue Position der Behälteraufnahmen 16 an dieser Stelle erfasst wird. Damit wird, in Kenntnis der Konfiguration der Rundläufermaschine, eine eindeutige Zuordnung erfasster Istwerte der Lagen der Rumpfetiketten und/oder Rückenetiketten zu einzelnen Behälteraufnahmen möglich, die wie oben beschrieben zur individuellen Korrektur einzelner Behälteraufnahmen verwendet werden kann.

Des Weiteren ist stromabwärts des zweiten Etikettieraggregats 7 eine zweite Kamera 9 mit zugeordneter Beleuchtungseinrichtung 91 vorgesehen, um Kontrollaufnahmen von der Lage der Rückenetiketten 8 zu machen. Auch hier werden die Behälter durch Drehen der zugehörigen Behälteraufnahmen dahingehend optimal positioniert, dass die Rückenetiketten 8 genau nach außen weisen. Durch statistische Auswertung der Kontrollaufnahmen der Kamera 9 kann, insbesondere in Kombination mit der statistischen Auswertung der Kontrollaufnahmen der Kamera 10, gezielt eine Korrektur der Lage der nachfolgend aufgebrachten Rückenetiketten erfolgen.

Nach erfolgter Etikettierung werden die Behälter 1 über den Auslaufstern 11 an einen Auslauftransporteur 12, beispielsweise ein Transportband übergeben. An dem Auslauftransporteur kann alternativ oder zusätzlich zu den Kameras 9 bzw. 10 ein Doppelkamerasystem 50 mit zugeordneten Beleuchtungseinrichtungen 51 angeordnet sein, welches gemeinsam sowohl die Lage der Rumpfetiketten 6 als auch die Lage der Rückenetiketten 8 als Istwerte erfasst. Beispielsweise können sich die beiden Kameras des Doppelkamerasystems 50 genau gegenüberstehen, um die gewünschten Sollwerte der Lage der beiden Etiketten abzubilden. Auch die von dem Doppelkamerasystem erfassten Istwerte können statistisch ausgewertet werden, wobei die Ergebnisse der Auswertung wie oben beschrieben zur Korrektur der Lage der Rumpfetiketten und Rückenetiketten auf nachfolgenden Behältern verwendet wird.

Von dem oben beschriebenen Steuer- und/oder Regelsystem ist in Figur 1 lediglich schematisch eine Steuer- und/oder Regeleinheit 22 dargestellt, die die Signale der Kameras 9, 10 und 50 sowie der Sensoren 20, 54, 57, 74 und 77 kabellos oder über Kabel empfangen, weiterverarbeiten und/oder speichern kann. Die exemplarische Steuer- und/oder Regeleinheit 22 ist zudem mit einem Touch-Display 23 verbunden, mit dem beispielsweise die Ergebnisse der statistischen Auswertung dargestellt werden. Des Weiteren können über das Touch-Display von einem Bediener Werte eingegeben werden, beispielsweise für die oben erwähnten Grenzwerte. Kabellos können die darzustellenden Ergebnisse bzw. eingegebenen Werte auch zu bzw. von einem mobilen Endgerät 24, beispielsweise einem Smartphone, übermittelt werden.

Figur 2 stellt eine schematische Detailansicht einer Behälteraufnahme im Bereich eines Etikettieraggregats in einer Seitenansicht dar. Der hier als Flasche dargestellte Behälter 1 wird von einer Behälteraufnahme 16 in Form eines Behältertellers transportiert, wobei die Behälteraufnahme mit einem eigenen, separaten Servomotor 15 ausgestattet ist, mittels dessen sich gesteuert eine Drehlage des Behälters und bevorzugt auch eine vertikale Position des Behälters einstellen lässt.

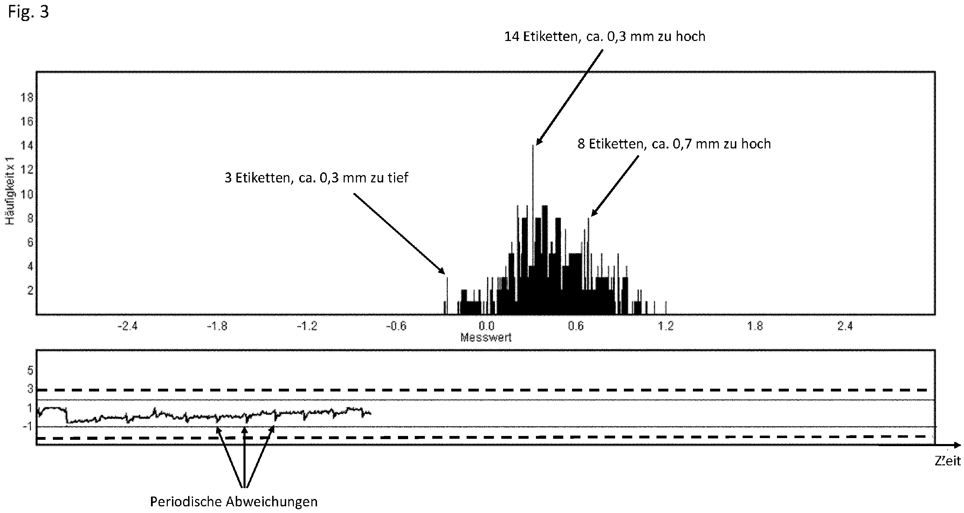

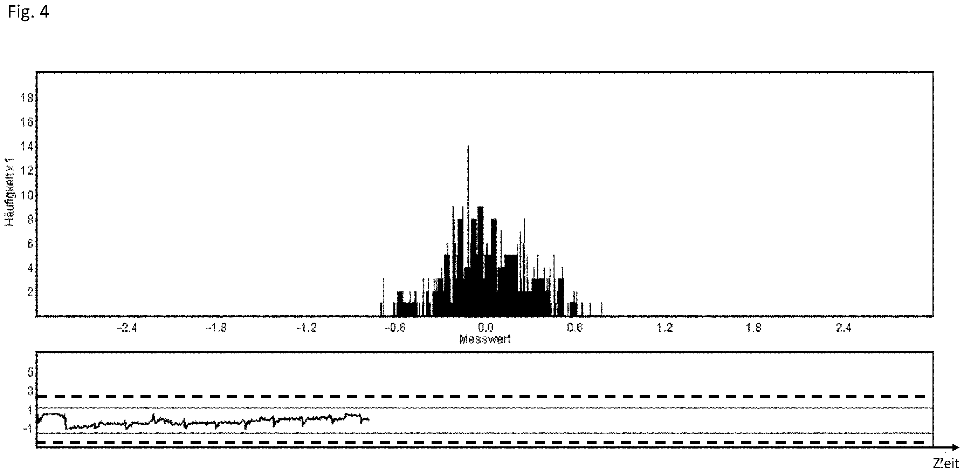

Sollte die oben beschriebene statistische Auswertung beispielsweise ergeben, dass die Istlage der Rumpfetiketten auf dem Behälter 1 im Mittel um -1,5 mm von der Solllage abweicht, so kann über den Servomotor 15 eine entsprechende Korrekturdrehung um diese Abweichung am Behälterteller 16 im Zulauf zu dem Etikettieraggregat 5 vorgenommen werden, so dass die nachfolgenden Rumpfetiketten wieder im Mittel in der Solllage übergeben werden. Ein Beispiel wird anhand einer Höhenkorrektur nachfolgend im Zusammenhang mit den Figuren 3 und 4 beschrieben. Über für die jeweiligen Behälterteller 16 individuelle Korrekturdrehungen mittels des Servomotors 15 kann auch ein periodisch auftretender Fehler, wie er beispielsweise in der Figur 3 gezeigt ist, korrigiert werden.

Die Behälteraufnahme 16 und der Servomotor 15 sind an dem in der Art eines Karussells rotierenden Behältertisch 4 angeordnet. Während des Umlaufs des Behälters entlang der Transportstrecke wird über den Servomotor 15 wie oben beschrieben mehrfach eine Drehung des Behälters bewirkt, um die in der Figur 2 angedeuteten Rumpfetiketten 6 und Rückenetiketten 8 lagerichtig auf die Flaschen aufzubringen.

In der exemplarischen Darstellung der Figur 2 befindet sich die Behälteraufnahme 16 mit der Flasche 1 gerade im Bereich des zweiten Etikettieraggregats 7, welches hier lediglich schematisch angedeutet ist. Um eine Höhenverstellbarkeit des aufgebrachten Rückenetikettes 8 zu ermöglichen, ist das zweite Etikettieraggregat 7 mit einem vertikalen Stellelement 13 und einem steuerbaren Motor 21 ausgestattet. Beispielsweise kann über einen Servomotor 21 eine Spindel 13 als vertikales Stellelement angetrieben werden, wodurch die relative Höhe des Etikettieraggregats 7 zum Behältertisch 4 verändert werden kann. Dies kann von der Steuer- und/oder Regeleinheit 22 gesteuert erfolgen, um eine bei der statistischen Auswertung festgestellte, nicht akzeptable mittlere Abweichung der erfassten Istwerte in Längsrichtung der Behälter zu korrigieren. Wird somit anhand der statistischen Auswertung eine mittlere Abweichung der Etiketten in der Höhe festgestellt, so kann über den Servomotor 21 eine entsprechende Korrektur vorgenommen werden. Bei einer Abweichung der Istlage der Rückenetiketten von der Solllage kann über den Servomotor 15 eine entsprechende Korrekturdrehung am Behälterteller 16 im Zulauf zu dem Etikettieraggregat 7 vorgenommen werden, so dass die nachfolgenden Rückenetiketten wieder mittig in Bezug auf die Solllage übergeben werden.

Somit kann bereits durch Ansteuern der Servomotoren 15 der Behälteraufnahmen 16 sowie des Servomotors 21 des Etikettieraggregats 7 eine Korrektur der Lage der Rückenetiketten 8 bezüglich einer Umfangsrichtung und einer Längsrichtung der Behälter 1 durchgeführt werden. Die oben beschriebenen statistischen Auswertungen gestatten dabei eine automatische Korrektur auch im Hochleistungsbetrieb der Etikettiermaschine.

Die Figur 3 stellt exemplarisch die Ergebnisse einer Messreihe zur Abweichung der erfassten Istwerte von einer Solllage eines Etiketts in Längsrichtung des Behälters dar. Im oberen Diagramm ist dabei ein Histogramm der Abweichungen der aufgebrachten Etiketten, beispielsweise Rückenetiketten, von einer vorgegebenen Solllage in mm in Längsrichtung des Behälters, beispielsweise einer Flasche, dargestellt. Einige exemplarische Abweichungswerte sind in der Figur 3 unter Angabe ihrer jeweiligen Häufigkeit hervorgehoben. Aufgrund der relativ großen Zahl der erfassten Istwerte folgt die Verteilung im Wesentlichen einer Normalverteilung, wobei der in der Figur 3 erkennbar zu positiven Werten verschobene Mittelwert Ausdruck einer systematischen Abweichung, beispielsweise durch eine Fehlstellung des Etikettieraggregats 7, ist.

Eine solche systematische Abweichung kann wie oben beschrieben durch eine entsprechende Korrekturanpassung, beispielsweise durch Verstellung der Höhe des Etikettieraggregats 7 mittels des Servomotors 21, korrigiert werden. Dabei erfolgt die Korrekturanpassung bevorzugt um den statistisch bestimmten Mittelwert in die entgegengesetzte Richtung. Das Ergebnis einer solchen Anpassung ist in Figur 4 zu sehen, welche die Ergebnisse der Messreihe der Figur 3 verschoben um die mittlere Abweichung darstellt. Die erfassten Istwerte streuen weiterhin mit derselben Standardabweichung, wobei der Mittelwert der Verteilung jedoch nunmehr mit der Solllage bei Null zusammenfällt.

In den unteren Diagrammen der Figuren 3 und 4 ist der zeitliche Verlauf der Abweichung der erfassten Istwerte von der Solllage exemplarisch dargestellt. Neben einem zeitlichen Trend zu nach oben, d.h. zu positiven Werten, hin verschobenen Etiketten sind aus diesen Diagrammen auch periodisch auftretende Abweichungen zu entnehmen, die beispielsweise durch Fehlstellungen einzelner Behälterteller 16 verursacht werden können. Derartige periodisch auftretende Abweichungen können ebenso wie oben beschrieben mittels der statistischen Auswertung erfasst und entsprechend korrigiert werden.

Des Weiteren sind in den Diagrammen zwei Intervalle um die Solllage in Form von durchgezogenen bzw. gestrichelten Linien dargestellt. Die durchgezogenen Linien geben beispielsweise Toleranzgrenzen für die Abweichung individueller Istwerte an. Werden diese Toleranzgrenzen überschritten, kann, beispielsweise über das Touch-Display, eine Warnung ausgegeben werden. Darüber hinaus kann ein derartiges Überschreiten auch die oben beschriebenen statistischen Auswertungen mit entsprechenden Korrekturvorgängen auslösen. Die gestrichelten Linien geben hingegen exemplarische Stoppgrenzen an. Wird eine solche Stoppgrenze überschritten, kann die Anlage, beispielsweise zur manuellen Nachjustage, angehalten werden.

Die Figuren 3 und 4 demonstrieren, wie die statistische Auswertung einer großen Anzahl erfasster Istwerte, aufgrund des Gesetzes der großen Zahlen sowohl die Korrektur systematischer Abweichungen als auch individueller Fehlstellungen gestattet, ohne wesentlich in den Produktionsbetrieb einzugreifen.

## Patentansprüche

1. Verfahren zum Kennzeichnen, insbesondere zum Etikettieren und/oder Bedrucken, von Behältern (1) mit wenigstens einem Kennzeichnungselement (6, 8), insbesondere einem Etikett, umfassend:
Transportieren der Behälter (1) entlang einer Transportstrecke mittels einer Transportvorrichtung (4), insbesondere einer Rundläufermaschine, mit einer Vielzahl von um Drehachsen drehbar angeordneten Behälteraufnahmen (16) für je einen Behälter;
Aufbringen jeweils eines ersten Kennzeichnungselements (6) auf eine Außenfläche der Behälter mittels eines ersten Kennzeichnungsaggregrats (5), das an der Transportstrecke angeordnet ist; und
Erfassen der Lage des auf den jeweiligen Behälter aufgebrachten ersten Kennzeichnungselements (6) als Istwert mittels einer ersten Sensoreinheit (10, 50), die stromabwärts des ersten Kennzeichnungsaggregats (5) angeordnet ist,
wobei die erfassten Istwerte der Lage des ersten Kennzeichnungselements (6) für eine Vielzahl von Behältern (1) mittels eines Steuer- und/oder Regelsystems (22) statistisch ausgewertet werden und eine Korrektur des Aufbringens des ersten Kennzeichnungselements bzgl. der Lage des ersten Kennzeichnungselements auf der Grundlage der statistischen Auswertung vorgenommen wird, wobei die statistische Auswertung auf der Grundlage von wenigstens 30 erfassten Istwerten, bevorzugt wenigstens 300 erfassten Istwerten vorgenommen wird,
Zuordnen erfasster Istwerte zu den jeweiligen Behälteraufnahmen (16) der Transportvorrichtung (4), wobei die Korrektur bzgl. der Lage des ersten Kennzeichnungselements mittels des Steuer- und/oder Regelsystems (22) spezifisch für die jeweilige Behälteraufnahme der Transportvorrichtung erfolgt, und
Erfassen einer absoluten Position wenigstens einer Behälteraufnahme (16) entlang der Transportstrecke mittels wenigstens einer Positionserfassungseinheit (20), wobei das Steuer- und/oder Regelsystem (22) erfasste Istwerte basierend auf einem Signal der wenigstens einen Positionserfassungseinheit den jeweiligen Behälteraufnahmen (16) zuordnet.

2. Verfahren nach Anspruch 1, wobei die statistische Auswertung das Bestimmen eines Mittelwertes und/oder einer Streuung der erfassten Istwerte umfasst.

3. Verfahren nach Anspruch 1 oder 2, wobei eine Anzahl der erfassten Istwerte für die statistische Auswertung wenigstens ein Vielfaches einer Anzahl der Behälteraufnahmen (16) der Transportvorrichtung (4) beträgt, und
wobei die statistische Auswertung insbesondere ein Detektieren periodisch auftretender Abweichungen der erfassten Istwerte von einem Sollwert, bevorzugt mittels Fourier-Analyse, umfasst.

4. Verfahren nach Anspruch 3, weiterhin ein Zuordnen erfasster Istwerte zu jeweiligen Greiferelementen eines Greiferzylinders (56) des ersten Kennzeichnungsaggregats (5) umfassend,
wobei die Korrektur bzgl. der Lage des ersten Kennzeichnungselements mittels des Steuer-und/oder Regelsystems (22) spezifisch für das jeweilige Greiferelement des Greiferzylinders erfolgt.

5. Verfahren nach Anspruch 3 oder 4, weiterhin ein Bestimmen wenigstens einer Behälteraufnahme (16) der Transportvorrichtung (4) und/oder eines Greiferelements des Greiferzylinders (56) des ersten Kennzeichnungsaggregats (5) umfassend, für die bzw. das eine Abweichung des zugehörigen erfassten Istwertes von einem Sollwert der Lage des ersten Kennzeichnungselements (6) einen konfigurierbaren Grenzwert überschreitet,
wobei insbesondere die zugehörige Behälteraufnahme und/oder das zugehörige Greiferelement über ein akustisches und/oder optisches Signal gekennzeichnet wird und/oder in einer Anzeigeeinrichtung (23, 24) angezeigt wird.

6. Verfahren nach einem der vorhergehenden Ansprüche, weiterhin umfassend:
Aufbringen jeweils eines zweiten Kennzeichnungselements (8) auf die Außenfläche der Behälter (1) mittels eines zweiten Kennzeichnungsaggregrats (7), das an der Transportstrecke stromabwärts von dem ersten Kennzeichnungsaggregat (5) angeordnet ist; und
Erfassen der Lage des auf den jeweiligen Behälter aufgebrachten zweiten Kennzeichnungselements (8) als Istwert mittels einer zweiten Sensoreinheit (9, 50), die stromabwärts des zweiten Kennzeichnungsaggregats (7) angeordnet ist;
wobei die erfassten Istwerte der Lage des zweiten Kennzeichnungselements (8) für die Vielzahl von Behältern (1), insbesondere in Relation zu den erfassten Istwerten der Lage des ersten Kennzeichnungselements (6), mittels des Steuer- und/oder Regelsystems (22) statistisch ausgewertet werden und eine Korrektur des Aufbringens des zweiten Kennzeichnungselements (8) bzgl. der Lage des zweiten Kennzeichnungselements (8) auf der Grundlage der statistischen Auswertung vorgenommen wird.

7. Verfahren nach einem der vorhergehenden Ansprüche, wobei die statistische Auswertung das Bestimmen einer, insbesondere mittleren, Abweichung der erfassten Istwerte von einem Sollwert der Lage in einer Umfangsrichtung der Behälter (1) umfasst, und
wobei die Korrektur ein Drehen der Behälter um eine Behälterlängsachse vor dem Aufbringen des ersten bzw. des zweiten Kennzeichnungselements (6, 8) und/oder ein Anpassen eines Zeitpunktes des Aufbringens des ersten bzw. des zweiten Kennzeichnungselements (6, 8) umfasst.

8. Verfahren nach einem der vorhergehenden Ansprüche, wobei die statistische Auswertung das Bestimmen einer, insbesondere mittleren, Abweichung der erfassten Istwerte von einem Sollwert der Lage in einer Längsrichtung der Behälter (1) umfasst, und
wobei die Korrektur eine vertikale Verschiebung der Behälter (1) und/oder des ersten bzw. zweiten Kennzeichnungsaggregats (5, 7) umfasst.

9. Maschine zum Kennzeichnen, insbesondere zum Etikettieren und/oder Bedrucken, von Behältern (1) mit wenigstens einem Kennzeichnungselement (6, 8), insbesondere einem Etikett, umfassend:
eine Transportvorrichtung (4), insbesondere eine Rundläufermaschine, mit einer Vielzahl von um Drehachsen drehbar angeordneten Behälteraufnahmen (16) für je einen Behälter zum Transport der Behälter entlang einer Transportstrecke;
ein erstes Kennzeichnungsaggregat (5), das an der Transportstrecke angeordnet ist, zum Aufbringen jeweils eines ersten Kennzeichnungselements (6) auf eine Außenfläche der Behälter; und
eine erste Sensoreinheit (10, 50), die stromabwärts des ersten Kennzeichnungsaggregats (5) angeordnet und dazu ausgebildet ist, die Lage des auf den jeweiligen Behälter aufgebrachten ersten Kennzeichnungselements (6) als Istwert zu erfassen; und
ein Steuer- und/oder Regelsystem (22), das dazu ausgebildet ist, die erfassten Istwerte der Lage des ersten Kennzeichnungselements (6) für eine Vielzahl von Behältern (1) statistisch auszuwerten, um die statistische Auswertung auf der Grundlage von wenigstens 30 erfassten Istwerten, bevorzugt wenigstens 300 erfassten Istwerten vorzunehmen, und eine Korrektur des Aufbringens des ersten Kennzeichnungselements (6) bzgl. der Lage des ersten Kennzeichnungselements (6) auf der Grundlage der statistischen Auswertung vorzunehmen,
wobei das Steuer- und/oder Regelsystem (22) ferner dazu ausgebildet ist, die erfassten Istwerte den jeweiligen Behälteraufnahmen (16) der Transportvorrichtung (4) zuzuordnen und die Korrektur bzgl. der Lage des ersten Kennzeichnungselements spezifisch für die jeweilige Behälteraufnahme der Transportvorrichtung vorzunehmen, und
die Maschine weiterhin wenigstens eine Positionserfassungseinheit (20) zum Erfassen einer absoluten Position wenigstens einer Behälteraufnahme (16) entlang der Transportstrecke umfasst, wobei das Steuer- und/oder Regelsystem (22) ferner dazu ausgebildet ist, erfasste Istwerte basierend auf einem Signal der wenigstens einen Positionserfassungseinheit den jeweiligen Behälteraufnahmen (16) zuzuordnen.

10. Maschine nach Anspruch 9, wobei das Steuer- und/oder Regelsystem (22) ferner dazu ausgebildet ist, als Teil der statistischen Auswertung einen Mittelwert und/oder eine Streuung der erfassten Istwerte zu bestimmen und/oder periodisch auftretende Abweichungen der erfassten Istwerte von einem Sollwert, bevorzugt mittels Fourier-Analyse, zu detektieren.

11. Maschine nach Anspruch 9 oder 10, wobei das Steuer- und/oder Regelsystem (22) ferner dazu ausgebildet ist, wenigstens eine Behälteraufnahme (16) der Transportvorrichtung (4) zu bestimmen, für die eine Abweichung des zugehörigen erfassten Istwertes von einem Sollwert der Lage des ersten Kennzeichnungselements (6) einen konfigurierbaren Grenzwert übersteigt, und insbesondere die zugehörige Behälteraufnahme (16) über ein akustisches und/oder optisches Signal eines akustischen und/oder optischen Signalgebers zu kennzeichnen und/oder in einer Anzeigeeinrichtung (23, 24) des Steuer- und/oder Regelsystems anzuzeigen.

12. Maschine nach einem der Ansprüche 9 bis 11, wobei das Steuer- und/oder Regelsystem (22) wenigstens einen Servomotor (15) zum gesteuerten Drehen der Behälter (1) um eine Behälterlängsachse umfasst, und
wobei das Steuer- und/oder Regelsystem (22) ferner dazu ausgebildet ist, die Behälter mittels des wenigstens einen Servomotors (15) auf der Grundlage der statistischen Auswertung vor dem Aufbringen des ersten Kennzeichnungselements (6), insbesondere um einen für die jeweilige Behälteraufnahme spezifischen Winkel, zu drehen.

13. Maschine nach einem der Ansprüche 9 bis 12, wobei das Steuer- und/oder Regelsystem (22) wenigstens eine motorische Höhenverstellung (13, 15, 21) der Behälteraufnahmen (16) und/oder des ersten Kennzeichnungsaggregats (5) umfasst, und
wobei das Steuer- und/oder Regelsystem (22) ferner dazu ausgebildet ist, eine relative Höhe zwischen den Behältern (1) und dem ersten Kennzeichnungsaggregat (5) mittels der wenigstens einen motorischen Höhenverstellung auf der Grundlage der statistischen Auswertung vor dem Aufbringen des ersten Kennzeichnungselements (6), insbesondere um einen für die jeweilige Behälteraufnahme (16) spezifischen Höhenversatz, zu verändern.

14. Maschine nach einem der Ansprüche 9 bis 13, wobei das erste Kennzeichnungsaggregat (5) einen Greiferzylinder (56) zum Aufbringen von Etiketten als erstes Kennzeichnungselement (6) auf die Außenfläche der Behälter (1) umfasst, und
wobei das Steuer- und/oder Regelsystem (22) dazu ausgebildet ist, durch Ansteuern des Greiferzylinders (56) einen Zeitpunkt des Aufbringens des ersten Kennzeichnungselements (6) auf den jeweiligen Behälter (1) auf der Grundlage der statistischen Auswertung anzupassen.

## Claims

1. A method for marking, in particular labelling and/or printing, of containers (1) with at least one marking element (6, 8), in particular a label, comprising:
transporting the containers (1) along a transport path by means of a transport device (4), in particular a rotary machine, including a plurality of container receptacles (16) arranged rotatably about axes of rotation, each for one container;
applying a respective first marking element (6) onto an outer surface of the container by means of a first marking apparatus (5) arranged along the transport path; and
detecting the position of the first marking element (6) applied to the respective container as an actual value by means of a first sensor unit (10, 50) arranged downstream of the first marking apparatus (5),
wherein the detected actual values of the position of the first marking element (6) for a plurality of containers (1) are statistically evaluated by means of a control and/or regulation system (22), and a correction of the application of the first marking element with respect to the position of the first marking element is carried out on the basis of the statistical evaluation, the statistical evaluation being carried out on the basis of at least 30 detected actual values, preferably at least 300 detected actual values,
associating detected actual values with the respective container receptacles (16) of the transport device (4), the correction with respect to the position of the first marking element by means of the control and/or regulation system (22) being carried out specifically for the respective container receptacle of the transport device, and
detecting an absolute position of at least one container receptacle (16) along the transport path by means of at least one position detection unit (20), wherein
the control and/or regulation system (22) associates detected actual values with the respective container receptacles (16) on the basis of a signal of the at least one position detection unit.

2. The method of claim 1, wherein the statistical evaluation comprises determining a mean value and/or a variability of the detected actual values.

3. The method according to claims 1 or 2, wherein a number of the detected actual values for the statistical evaluation is at least a multiple of a number of the container receptacles (16) of the transport device (4), and
wherein the statistical evaluation comprises in particular detecting periodically occurring deviations of the detected actual values from a set value, preferably by means of Fourier analysis.

4. The method according to claim 3, further comprising associating detected actual values with respective gripper members of a gripper cylinder (56) of the first marking apparatus (5),
wherein the correction with respect to the position of the first marking element is carried out by means of the control and/or regulation system (22) specifically for the respective gripper member of the gripper cylinder.

5. The method according to claim 3 or 4, further comprising determining at least one container receptacle (16) of the transport device (4) and/or a gripper member of the gripper cylinder (56) of the first marking apparatus (5) for which a deviation of the associated detected actual value from a set value of the position of the first marking element (6) exceeds a configurable limit value, wherein in particular the associated container receptacle and/or the associated gripper member is identified via an acoustic and/or optical signal and/or is displayed on a display means (23, 24).

6. The method according to any one of the preceding claims, further comprising:
applying a second marking element (8) to the outer surface of the containers (1) by means of a second marking apparatus (7) disposed downstream of the first marking apparatus (5) along the transport path; and
detecting the position of the second marking element (8) applied to the respective container as an actual value by means of a second sensor unit (9, 50) arranged downstream of the second marking apparatus (7);
wherein the detected actual values of the position of the second marking element (8) for the plurality of containers (1), in particular in relation to the detected actual values of the position of the first marking element (6), are statistically evaluated by means of the control and/or regulation system (22) and a correction of the application of the second marking element (8) with respect to the position of the second marking element (8) is carried out on the basis of the statistical evaluation.

7. The method according to any one of the preceding claims, wherein the statistical evaluation comprises determining a deviation, in particular a mean deviation, of the detected actual values from a set value of the position in a circumferential direction of the containers (1), and
wherein the correction comprises rotating the containers about a longitudinal container axis prior to applying the first and the second marking element (6, 8), respectively, and/or adjusting a timing of applying the first and the second marking element (6, 8), respectively.

8. The method according to any one of the preceding claims, wherein the statistical evaluation comprises determining a deviation, in particular a mean deviation, of the detected actual values from a set value of the position in a longitudinal direction of the containers (1), and
wherein the correction comprises a vertical displacement of the containers (1) and/or the first and second marking apparatus (5, 7), respectively.

9. A machine for marking, in particular labelling and/or printing, of containers (1) with at least one marking element (6, 8), in particular a label, comprising:
a transport device (4), in particular a rotary machine, including a plurality of container receptacles (16) arranged rotatably about axes of rotation, each for one container;
a first marking apparatus (5), arranged along the transport path, for applying a first marking element (6) to an outer surface of the containers; and
a first sensor unit (10, 50) arranged downstream of the first marking apparatus (5) and configured to detect the position of the first marking element (6) applied to the respective container as an actual value; and
a control and/or regulation system (22) configured to statistically evaluate the detected actual values of the position of the first marking element (6) for a plurality of containers (1), in order to carry out the statistical evaluation on the basis of at least 30 detected actual values, preferably at least 300 detected actual values, and to carry out a correction of the application of the first marking element (6) with respect to the position of the first marking element (6) on the basis of the statistical evaluation,
wherein the control and/or regulation system (22) is further configured to associate the detected actual values to the respective container receptacles (16) of the transport device (4) and to carry out the correction with respect to the position of the first marking element specifically for the respective container receptacle of the transport device, and
the machine further comprises at least one position detection unit (20) for detecting an absolute position of at least one container receptacle (16) along the transport path, wherein the control and/or regulation system (22) is further configured to associate detected actual values with the respective container receptacles (16) on the basis of a signal of the at least one position detection unit.

10. The machine according to claim 9, wherein the control and/or regulation system (22) is further configured to determine, as part of the statistical evaluation, a mean value and/or a variability of the detected actual values and/or to detect periodically occurring deviations of the detected actual values from a set value, preferably by means of Fourier analysis.

11. The machine according to claim 9 or 10, wherein the control and/or regulation system (22) is further configured to determine at least one container receptacle (16) of the transport device (4) for which a deviation of the associated detected actual value from a set value of the position of the first marking element (6) exceeds a configurable limit value, and in particular to identify the associated container receptacle (16) via an acoustic and/or optical signal of an acoustic and/or optical signal generator and/or to display the same on a display device (23, 24) of the control and/or regulation system.

12. The machine according to any one of claims 9 to 11, wherein the control and/or regulation system (22) comprises at least one servomotor (15) for controlled rotation of the containers (1) about a longitudinal container axis, and
wherein the control and/or regulation system (22) is further configured to rotate the containers by means of the at least one servomotor (15) on the basis of the statistical evaluation prior to the application of the first marking element (6), in particular by an angle specific to the respective container receptacle.

13. The machine according to any one of claims 9 to 12, wherein the control and/or regulation system (22) comprises at least one motor-driven means (13, 15, 21) for height adjustment of the container receptacles (16) and/or of the first marking apparatus (5), and
wherein the control and/or regulation system (22) is further configured to change a relative height between the containers (1) and the first marking apparatus (5) by means of the at least one motor-driven means for height adjustment on the basis of the statistical evaluation prior to the application of the first marking element (6), in particular by a height offset specific to the respective container receptacle (16).

14. The machine according to any one of claims 9 to 13, wherein the first marking apparatus (5) comprises a gripper cylinder (56) for applying labels as a first marking element (6) to the outer surface of the containers (1), and
wherein the control and/or regulation system (22) is configured to adjust a timing of application of the first marking element (6) to the respective container (1) on the basis of the statistical evaluation by controlling the gripper cylinder (56).

## Revendications

1. Procédé de marquage, en particulier d'étiquetage et/ou d'impression, de récipients (1) avec au moins un élément de marquage (6, 8), en particulier une étiquette, comprenant les étapes consistant à :
transporter les récipients (1) le long d'une voie de transport au moyen d'un dispositif de transport (4), en particulier d'une machine de convoyage circulaire, comprenant plusieurs logements de récipient (16) agencés de manière à pouvoir tourner autour d'axes de rotation pour un récipient à la fois ;
appliquer un premier élément de marquage (6) sur une surface extérieure des récipients au moyen d'un premier dispositif de marquage (5) qui est agencé sur la voie de transport ; et
détecter la position du premier élément de marquage (6) appliqué au récipient respectif en tant que valeur réelle au moyen d'une première unité de détection (10, 50) qui est agencée en aval du premier dispositif de marquage (5),
dans lequel les valeurs réelles détectées de la position du premier élément de marquage (6) pour une pluralité de récipients (1) sont évaluées statistiquement au moyen d'un système de commande et/ou de régulation (22) et une correction de l'application du premier élément de marquage par rapport à la position du premier élément de marquage est effectuée sur la base de l'évaluation statistique, l'évaluation statistique étant effectuée sur la base d'au moins 30 valeurs réelles détectées, de préférence d'au moins 300 valeurs réelles détectées,
associer les valeurs réelles détectées aux logement de récipients de récipients respectifs (16) du dispositif de transport (4), la correction concernant la position du premier élément de marquage s'effectuant au moyen du système de commande et/ou de régulation (22) spécifiquement pour le logement de récipient respectif du dispositif de transport, et
détecter une position absolue d'au moins un logement de récipient (16) le long de la voie de transport au moyen d'au moins une unité de détection de position (20), le système de commande et/ou de régulation (22) associant des valeurs réelles détectées sur la base d'un signal de la au moins une unité de détection de position aux logements de récipient respectifs (16).

2. Procédé selon la revendication 1, dans lequel l'évaluation statistique comprend la détermination d'une valeur moyenne et/ou d'une dispersion des valeurs réelles détectées.

3. Procédé selon la revendication 1 ou 2, dans lequel un nombre des valeurs réelles détectées pour l'évaluation statistique est au moins un multiple d'un nombre de logements de récipient (16) du dispositif de transport (4), et
dans lequel l'évaluation statistique comprend en particulier une détection d'écarts périodiques des valeurs réelles détectées par rapport à une valeur de consigne, de préférence au moyen d'une analyse de Fourier.

4. Procédé selon la revendication 3, comprenant en outre une association de valeurs réelles détectées à des éléments de préhension respectifs d'un cylindre de préhension (56) du premier dispositif de marquage (5),
dans lequel la correction de la position du premier élément de marquage est effectuée au moyen du système de commande et/ou de régulation (22) spécifiquement pour l'élément de préhension respectif du cylindre de préhension.

5. Procédé selon la revendication 3 ou 4, comprenant en outre une détermination d'au moins un logement de récipient (16) du dispositif de transport (4) et/ou d'un élément de préhension du cylindre de préhension (56) du premier dispositif de marquage (5) pour lequel un écart de la valeur réelle détectée associée par rapport à une valeur de consigne de la position du premier élément de marquage (6) dépasse une valeur limite configurable,
dans lequel en particulier le logement de récipient associé et/ou l'élément de préhension associé sont **caractérisés par** un signal acoustique et/ou optique et/ou sont affichés dans un dispositif d'affichage (23, 24).

6. Procédé selon l'une quelconque des revendications 1 à 5, comprenant en outre les étapes consistant à :
appliquer un second élément de marquage (8) sur la surface extérieure des récipients (1) au moyen d'un second dispositif de marquage (7) qui est agencé sur la distance de transport en aval du premier dispositif de marquage (5) ; et
détecter la position du second élément de marquage (8) appliqué sur le récipient respectif en tant que valeur réelle au moyen d'une seconde unité de détection (9, 50) qui est agencée en aval du second dispositif de marquage (7) ;
dans lequel les valeurs réelles détectées de la position du second élément de marquage (8) pour la pluralité de récipients (1), en particulier par rapport aux valeurs réelles détectées de la position du premier élément de marquage (6), sont évaluées statistiquement au moyen du système de commande et/ou de régulation (22) et une correction de l'application du second élément de marquage (8) par rapport à la position du second élément de marquage (8) est effectuée sur la base de l'évaluation statistique.

7. Procédé selon l'une quelconque des revendications précédentes, dans lequel l'évaluation statistique comprend la détermination d'un écart, en particulier moyen, des valeurs réelles détectées par rapport à une valeur de consigne de la position dans une direction circonférentielle des récipients (1), et
dans lequel la correction comprend une rotation des récipients autour d'un axe longitudinal de récipient avant l'application du premier ou du second élément de marquage (6, 8), respectivement, et/ou une adaptation d'un instant d'application du premier ou du second élément de marquage (6, 8), respectivement.

8. Procédé selon l'une quelconque des revendications précédentes, dans lequel l'évaluation statistique comprend la détermination d'un écart, en particulier moyen, des valeurs réelles détectées par rapport à une valeur de consigne de la position dans une direction longitudinale des récipients (1), et
dans lequel la correction comprend un déplacement vertical des récipients (1) et/ou du premier ou du second dispositif de marquage (5, 7).

9. Machine de marquage, en particulier pour l'étiquetage et/ou l'impression, de récipients (1) avec au moins un élément de marquage (6, 8), en particulier une étiquette, comprenant :
un dispositif de transport (4), en particulier une machine de convoyage circulaire, comprenant une pluralité de logements de récipient (16) agencés de manière à pouvoir tourner autour d'axes de rotation pour chaque récipient pour le transport des récipients le long d'une voie de transport ;
un premier dispositif de marquage (5), agencé au niveau de la voie de transport, pour appliquer un premier élément de marquage (6) sur une surface extérieure des récipients ; et
une première unité de détection (10, 50) qui est agencée en aval du premier dispositif de marquage (5) et conçue pour détecter la position du premier élément de marquage (6) appliqué sur le récipient respectif en tant que valeur réelle ; et
un système de commande et/ou de régulation (22) qui est conçu pour évaluer statistiquement les valeurs réelles détectées de la position du premier élément de marquage (6) pour une pluralité de récipients (1), afin de procéder à l'évaluation statistique sur la base d'au moins 30 valeurs réelles détectées, de préférence d'au moins 300 valeurs réelles détectées, et de procéder à une correction de l'application du premier élément de marquage (6) par rapport à la position du premier élément de marquage (6) sur la base de l'évaluation statistique,
dans laquelle le système de commande et/ou de régulation (22) est en outre conçu pour associer les valeurs réelles détectées aux logement de récipient respectifs (16) du dispositif de transport (4) et pour effectuer la correction par rapport à la position du premier élément de marquage spécifiquement pour le logement de récipient respectif du dispositif de transport, et
la machine comprend en outre au moins une unité de détection de position (20) pour détecter une position absolue d'au moins un logement de récipient (16) le long de la voie de transport, le système de commande et/ou de régulation (22) étant en outre conçu pour associer des valeurs réelles détectées sur la base d'un signal de la au moins une unité de détection de position aux logements de récipient (16) respectifs.

10. Machine selon la revendication 9, dans laquelle le système de commande et/ou de régulation (22) est en outre conçu pour déterminer, dans le cadre de l'évaluation statistique, une valeur moyenne et/ou une dispersion des valeurs réelles détectées et/ou pour détecter des écarts périodiques des valeurs réelles détectées par rapport à une valeur de consigne, de préférence au moyen d'une analyse de Fourier.

11. Machine selon la revendication 9 ou 10, dans laquelle le système de commande et/ou de régulation (22) est en outre conçu pour déterminer au moins un logement de récipient (16) du dispositif de transport (4) pour lequel un écart de la valeur réelle détectée associée par rapport à une valeur de consigne de la position du premier élément de marquage (6) dépasse une valeur limite configurable, et en particulier pour marquer le logement de récipient (16) associé par un signal acoustique et/ou optique d'un générateur de signal acoustique et/ou optique et/ou pour l'afficher dans un dispositif d'affichage (23, 24) du système de commande et/ou de régulation.

12. Machine selon l'une quelconque des revendications 9 à 11, dans laquelle le système de commande et/ou de régulation (22) comprend au moins un servomoteur (15) pour une rotation commandée des récipients (1) autour d'un axe longitudinal de récipient, et
dans laquelle le système de commande et/ou de régulation (22) est en outre conçu pour faire tourner les récipients au moyen du au moins un servomoteur (15) sur la base de l'évaluation statistique avant l'application du premier élément de marquage (6), en particulier sur un angle spécifique pour le logement de récipient respectif.

13. Machine selon l'une quelconque des revendications 9 à 12, dans laquelle le système de commande et/ou de régulation (22) comprend au moins un réglage en hauteur motorisé (13, 15, 21) des logements de récipient (16) et/ou du premier dispositif de marquage (5), et
dans laquelle le système de commande et/ou de régulation (22) est en outre conçu pour modifier une hauteur relative entre les récipients (1) et le premier dispositif de marquage (5) au moyen du au moins un réglage en hauteur motorisé sur la base de l'évaluation statistique avant l'application du premier élément de marquage (6), en particulier pour obtenir un décalage en hauteur spécifique pour le logement de récipient (16) respectif.

14. Machine selon l'une quelconque des revendications 9 à 13, dans laquelle le premier dispositif de marquage (5) comprend un cylindre de préhension (56) pour appliquer des étiquettes en tant que premier élément de marquage (6) sur la surface extérieure des récipients (1), et
dans laquelle le système de commande et/ou de régulation (22) est conçu pour ajuster un instant de l'application du premier élément de marquage (6) sur le récipient respectif (1) en commandant le cylindre de préhension (56) sur la base de l'évaluation statistique.
